# EUROPEAN PATENT APPLICATION

(11) **EP 2 465 749 A2**
(43) Date of publication of application: **20.06.2012**
(21) Application number: 11194407.0
(22) Date of filing: 19.12.2011
(51) Int. Cl.: B62B 1/12, B62B 5/06

(54) **Toolless assembly of hand trucks and related methods**

(30) Priority: 17.12.2010 US 424421 P; 17.12.2010 US 424478 P
(71) Applicant: DG Manufacturing, LLC, Wichita, KS 67226 (US)
(72) Inventor: Ryan, Paul, Wichita, KS Kansas 67230 (US); Wood, Robert Allen, Lincoln, NE Nebraska 68506 (US)
(74) Representative: Lunt, Mark George Francis

(57) **Abstract**

A hand truck (100) comprising: (1) a frame assembly (101), (2) a nose plate (122) that is disposed adjacent a lower end of the frame assembly (101), and (3) a wheel assembly (130) that is attached adjacent a lower end of the frame assembly and that is adapted to facilitate the rolling movement of the hand truck (100) relative to a support surface. Various components of the hand truck (100) are adapted to allow a user to assemble the hand truck substantially without the use of tools.

## Description

### BACKGROUND

Hand trucks are often difficult and time consuming to assemble. Accordingly, there is a need for improved hand trucks that are relatively easy for a user to assemble.

### SUMMARY OF THE INVENTION

A hand truck, according to various embodiments, comprises: (1) a frame assembly; (2) a nose plate disposed adjacent a lower end of the fame assembly; and (3) a wheel assembly that is attached adjacent a lower end of the frame assembly, and that comprises at least one wheel that is adapted to facilitate the rolling movement of the hand truck over a support surface supporting the hand truck. In particular embodiments, the frame assembly comprises: (1) a first side frame assembly; (2) a second side frame assembly that is spaced apart from and co-facing the first side frame assembly; and (3) at least one central connector that extends between the first side frame assembly and the second side frame assembly. In certain embodiments, the nose plate is adapted to allow a user to attach the nose plate to the hand truck substantially without the use of tools.

An assembly, according to various embodiments, comprises: (1) a first part defining at least one opening and that comprises a finger that is adapted to flex and that is disposed adjacent the at least one opening; and (2) a second part that comprises at least one projection that extends from the second part and comprises a first end having a lip and a second end. In certain embodiments, the at least one projection is adapted to allow a user to insert the at least one projection into the at least one opening and to thereby flex the finger about a base of the finger away from a home position of the finger as the user inserts the at least one projection through the at least one opening. In particular embodiments, the lip of the at least one projection is adapted to engage at least a portion of an outer face of the first part when the user fully inserts the at least one projection through the at least one opening. In certain embodiments, the finger is adapted to return to (e.g., snap back to) the home position and engage the second end of the projection when the lip engages the at least the portion of the outer face of the first part. In particular embodiments, the finger and lip are adapted to cooperate to maintain the first part and the second part in a connected relationship.

A hand truck, according to various embodiments, comprises: (1) a frame assembly; (2) a nose plate that is attached adjacent a lower end of the frame assembly; and (3) a wheel assembly that is attached adjacent a lower end of the frame assembly, and that comprises at least one wheel that is adapted to facilitate the rolling movement of the hand truck over a support surface supporting the hand truck. In particular embodiments, the frame comprises: (1) a first elongated tubular member that comprises a first tab that extends outward a distance from a first end of the first elongated tubular member; (2) a second elongated tubular member that comprises a second tab that extends outward a distance from a first end of the second elongated tubular member; (3) at least one central connector that extends between the first elongated tubular member and the second elongated tubular member. In certain embodiments, the at least one central connector defines: (1) a first opening that is sized to correspond to the profile of the first elongated tubular member and is adapted to allow a user to insert the first elongated tubular member into the opening; (2) a second opening that is sized to correspond to the profile of the second elongated tubular member and that is adapted to allow a user to insert the second elongated tubular member into the opening; (3) a first tab notch that is adjacent the first tab when the user at least fully inserts the first elongated tubular member into the first opening; and (4) a second tab notch that is adj acent the second tab when the user at least fully inserts the second elongated tubular member into the second opening. In particular embodiments, the first elongated tubular member is adapted to allow a user to twist the first tab within the first tab notch after the user has at least fully inserted the first elongated tubular member into the first opening. In certain embodiments, the edges that define the first tab notch are adapted to engage and exert opposing forces on the first tab when the user twists the first tab within the first tab notch. In particular embodiments, the first tab notch is adapted to lock the first tab using the opposing forces. In certain embodiments, the second elongated tubular member is adapted to allow a user to twist the second tab within the second tab notch after the user has at least fully inserted the second elongated tubular member into the second opening. In particular embodiments, the edges that define the second tab notch are adapted to engage and exert opposing forces on the second tab when the user twists the second tab within the second tab notch. In certain embodiments, the second tab notch is adapted to lock the second tab using the opposing forces.

### BRIEF DESCRIPTION OF THE DRAWINGS

Having described various embodiments in general terms, reference will now be made to the accompanying drawings, which are not necessarily drawn to scale, and wherein:
FIG. 1 is a front perspective view of an expandable, convertible hand truck according to a first particular embodiment of the disclosed subject matter. In this figure, the hand truck is shown in a substantially vertical, hand truck configuration.
FIGS. 2 and 3 are front perspective views of the hand truck of FIG. 1 in which the hand truck's handle is in an extended position.
FIG. 4 is a front perspective view of the hand truck shown in FIG. 1 in which the hand truck is shown in a platform cart configuration.
FIG. 5 is a front perspective view of the hand truck shown in FIG. 4 in which the hand truck is shown in an extended platform cart configuration.
FIGS. 6-8 are close up views of a locking mechanism that may be used to maintain a hand truck, such as the hand truck of FIG. 1, in a particular extended or unextended orientation. These figures show the hand truck being gradually extended.
FIG. 9 is a front perspective view of a hand truck according to a second embodiment in which the hand truck is shown in a hand truck configuration.
FIG. 10 is a front perspective view of the hand truck of FIG. 9 in which the hand truck's lower handle is in an extended orientation.
FIG. 11 is a front perspective view of the hand truck of FIG. 9 in which the hand truck's upper handle is in an extended orientation.
FIG. 12 is a front perspective view of the hand truck of FIG. 9, in which the hand truck is shown in an unextended platform cart configuration.
FIGS. 13-14 are front perspective views of the hand truck of FIG. 9 in which the hand truck is shown in an extended platform cart configuration.
FIG. 15 is a front perspective view the hand truck of FIG. 9 in which the hand truck's lower handle is in an extended orientation.
FIG. 16 is a perspective view of a hand truck according to a further embodiment.
FIG. 17 is an exploded view of the hand truck of FIG. 16.
FIG. 18 is a perspective exploded view of a frame of the hand truck of FIG. 16.
FIG. 19 is a perspective view of the frame of the hand truck of FIG. 16 with the wheels and axle removed.
FIG. 20 is a perspective view of the frame of the hand truck of FIG. 16 with the wheels and axle removed.
FIG. 21 is a perspective view of the frame of the hand truck of FIG. 16.
FIG. 22 is a detail view of an upper portion of a first side frame assembly of the hand truck of FIG. 16.
FIG. 23 is a detail view of an upper portion of the first side frame assembly of the hand truck of FIG. 16.
FIG. 24 is a detail view of a middle portion of the first side frame assembly of the hand truck of FIG. 16.
FIG. 25 is a detail view of a middle portion of the first side frame assembly of the hand truck of FIG. 16.
FIG. 26 is a detail exploded view of an extendable frame assembly of the hand truck of FIG. 16.
FIGS. 27-28 are detail views of the extendable frame assembly of the hand truck of FIG. 16 transitioning from an unlocked to a locked position.
FIG. 29 is an exploded view of the frame, the extendable frame assembly, and an upper cart handle of the hand truck of FIG. 16.
FIG. 30 is a perspective view of a further embodiment of a hand truck.
FIG. 31 is a perspective view of a nose plate of the hand truck of FIG. 30.

### DETAILED DESCRIPTION OF VARIOUS EMBODIMENTS

Various embodiments of the disclosed subject matter will now be described more fully hereinafter with reference to the accompanying drawings, in which various embodiments of the disclosed subject matter are shown. The claimed technology may, however, be embodied in many different forms and should not be construed as limited to the embodiments set forth herein. Rather, these embodiments are provided so that this disclosure will be thorough and complete, and will fully convey the scope of the technology to those skilled in the art. Like numbers refer to like elements throughout.

### Expandable Hand Truck

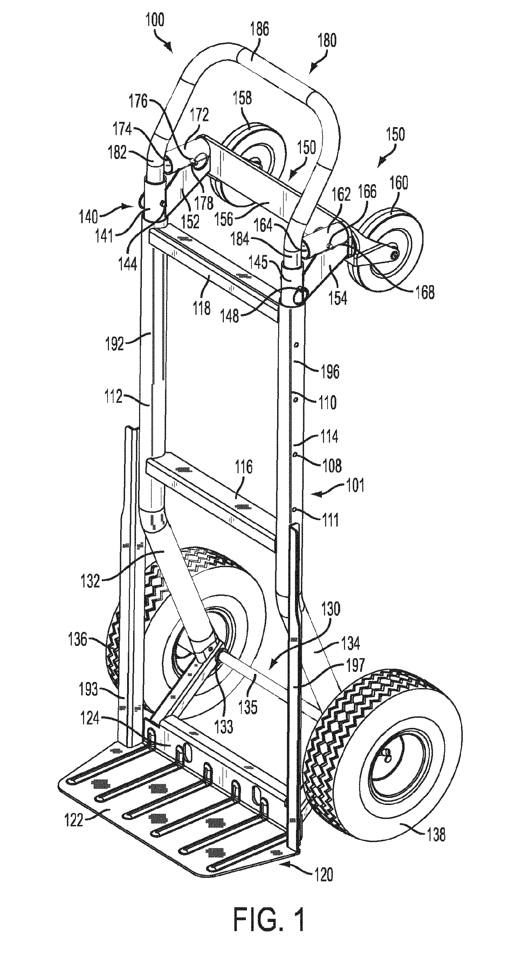

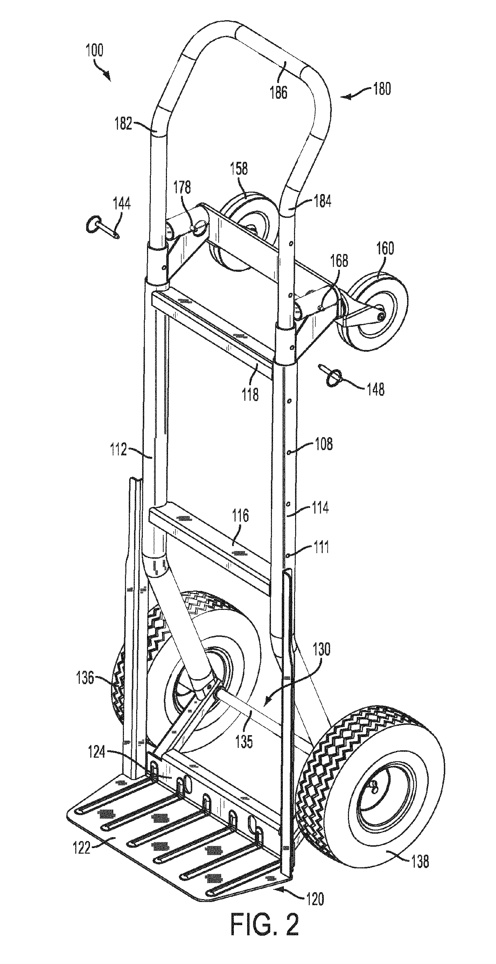

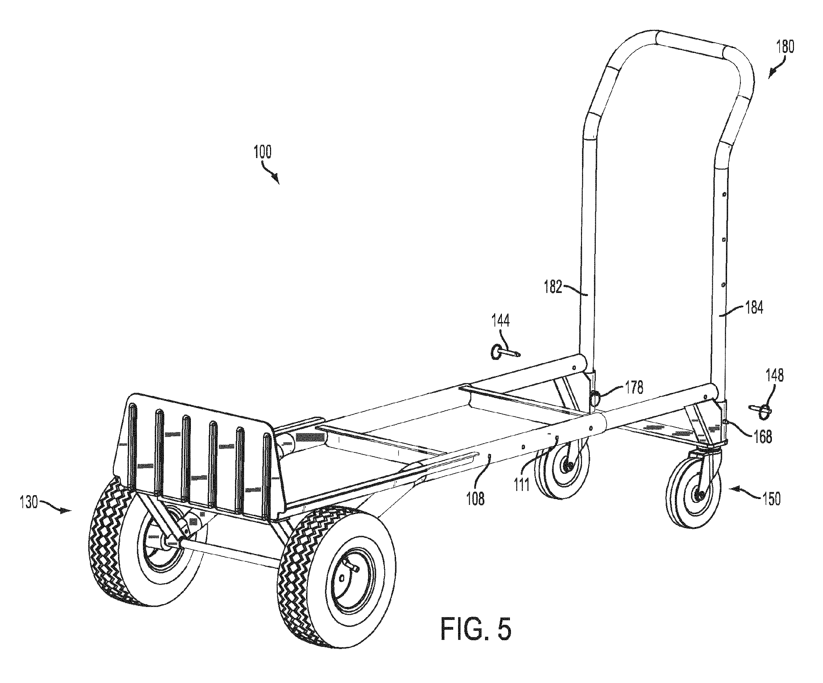

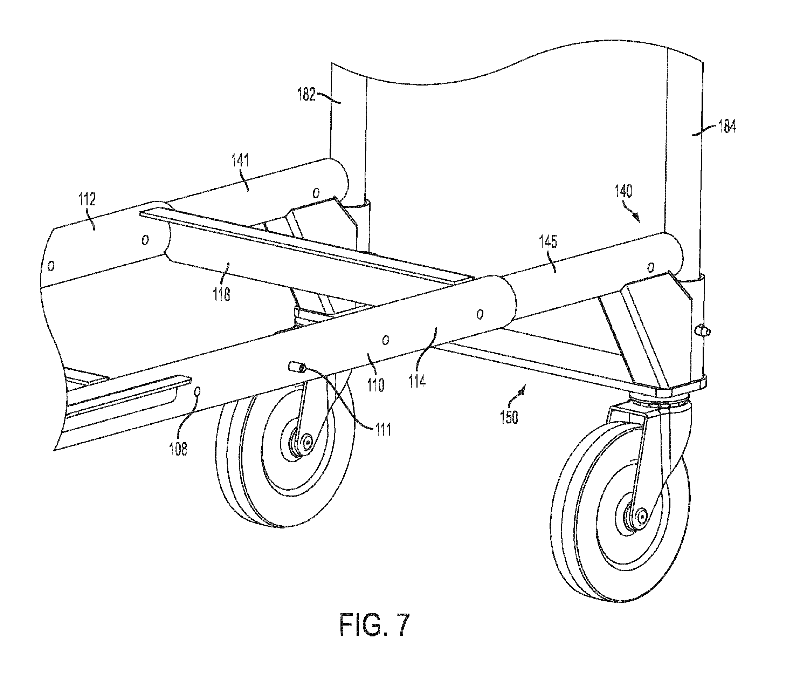

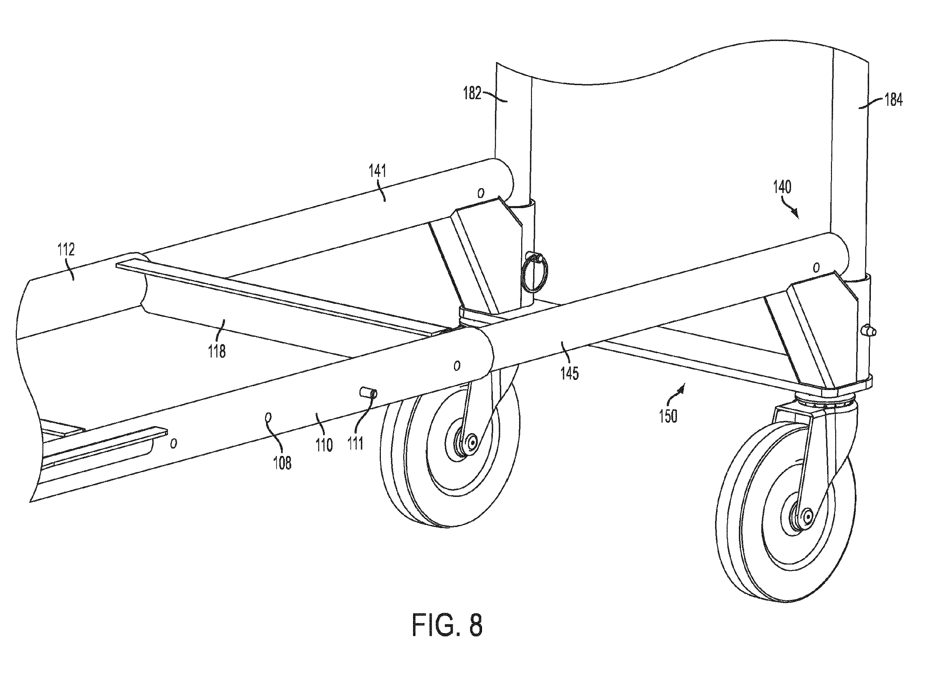

An expandable hand truck **100** according to a particular embodiment is shown in FIGS. 1-8. In this embodiment, the hand truck **100** comprises: (1) a hand truck base portion **101;** (2) an extendable frame assembly **140;** (3) a secondary wheel assembly **150;** and (4) an upper cart handle **180.** These components are discussed in greater detail below.

### Hand Truck Base Portion

In particular embodiments, the hand truck base portion **101** may comprise: (1) a frame **110;** (2) a nose plate **120;** and (3) a primary wheel assembly **130.** These components are discussed in greater detail below.

### 1. Frame

The hand truck base portion **101** may include any suitable type of frame. In the embodiment shown in FIG. 1, this frame **110** includes: (1) a right frame member **112** (which, in this embodiment, is a substantially straight, elongated frame member, which comprises an upper portion **192** and a lower portion **193,** and which is adapted to stand in a substantially vertical orientation when the hand truck base portion **101** is in an upright orientation); (2) a left frame member **114,** which, in this embodiment, is a substantially straight, elongated frame member, which comprises an upper portion **196** and a lower portion **197,** and which is adapted to stand in a substantially vertical orientation when the hand truck base portion **101** is in an upright orientation); and (3) a plurality of crossbars **116, 118** that extend between, and physically connect, the right and left frame members **112, 114.**

The various components of the frame **110** may be made of any suitable (preferably sturdy) material (e.g., a suitable metal such as steel or aluminum, or plastic). In various embodiments, these components are secured together using any suitable fastening technique to provide a rigid frame for the hand truck.

### 2. Nose Plate

The hand truck base portion **101** may include any suitable type of nose plate **120.** As shown in FIG. 1, this nose plate **120** may include: (1) a substantially planar support plate **122;** and (2) a substantially planar face plate **124** that extends upwardly adjacent a rear edge of the support plate **122.** The nose plate **120** is adapted to support a load and may be attached adjacent (e.g., to) a lower end of the hand truck base portion's frame **110** in any suitable manner (e.g., using suitable fasteners or welding techniques).

### 3. Primary Wheel Assembly

In particular embodiments, the hand truck's primary wheel assembly **130** is adapted for facilitating the movement of the hand truck **100** relative to a support surface that is supporting the hand truck **100.** In the embodiment shown in FIG. 1, the primary wheel assembly **130** includes a substantially L-shaped right axle support **132** that extends outwardly and rearwardly adjacent the lower end of the right frame member's upper portion **192,** and a substantially L-shaped left axle support **134** that extends outwardly and rearwardly adjacent (e.g., to) the lower end of the left frame member's upper portion **196.** The right axle support **132** defines an opening **133** adj acent an apex formed by the right axle support **132,** and the left axle support **134** defines a similar opening (not shown) that is adjacent an apex formed by the left axle support **134.**

The primary wheel assembly **130** may further include an elongated hand truck axle **135** (see FIG. 1) that extends through the openings **133** in the right and left axle supports **132, 134** so that the axle **135** is substantially parallel to a support surface that supports the hand truck **100** when the hand truck base portion **101** is in an upright orientation. The primary wheel assembly **130** further includes a pair of wheels **136, 138** that are rotatably mounted, respectively, adjacent (e.g., to) opposite ends of the hand truck's axle **135.**

### Extendable Frame Assembly

In particular embodiments, the extendable frame assembly **140** is adapted for facilitating the selective conversion of the hand truck **100** between: (1) an unextended configuration and (2) an extended configuration. In the embodiment of FIG. 1, this extendable frame assembly **140** includes: (1) a right extendable frame member **141;** (2) a left extendable frame member **145;** and (3) a connecting member that connects the right and left extendable frame members **141, 145.** These various components are discussed in greater detail below.

### 1. Right Extendable Frame Member

As shown in FIG. 1, the right extendable frame member **141** may comprise an elongated tube (e.g., a tube having a cross-section that, for example, may be substantially in the shape of a square, circle, oval, or any other suitable shape). The right extendable frame member **141** may be made of any suitable (preferably sturdy) material (e.g., a suitable metal such as steel or aluminum, or plastic).

As shown in FIG. 1, the right extendable frame member **141** may be adapted to fit within the upper portion **192** of the frame's right frame member **112** (which may be, for example, a hollow tube, or other suitable structure). In various embodiments, the inner cross-sectional profile of the upper portion **192** of the right frame member **112** at least substantially corresponds to an outer cross-sectional profile of the right extendable frame member **141.** In particular embodiments, the right extendable frame member **141** has an outer diameter that is substantially equal to an inner diameter of the upper portion **192** of the right frame member **112.** The respective diameters of the right extendable frame member **141** and upper portion **192** of the right frame member **112** may be chosen to allow the right extendable frame member **141** to translate within the upper portion **192** of the right frame member **112** while maintaining the right extendable frame member **141** in a substantially parallel configuration with the left extendable frame member **145** (e.g., while maintaining a tight fit- e.g., a mating fit - between the right extendable frame member **141** and the upper portion **192** of the right frame member **112).**

### 2. Left Extendable Frame Member

As shown in FIG. 1, the left extendable frame member **145** may comprise an elongated tube (e.g., a tube having a cross-section that, for example, may be substantially in the shape of a square, circle, oval, or any other suitable shape). The left extendable frame member **145** may be made of any suitable (preferably sturdy) material (e.g., a suitable metal such as steel or aluminum, or plastic).

As shown in FIG. 1, the left extendable frame member **145** may be adapted to fit within the upper portion **196** of the frame's left frame member **114** (which may be, for example, a hollow tube, or other suitable structure). In various embodiments, the inner cross-sectional profile of the upper portion **196** of the left frame member **114** at least substantially corresponds to an outer cross-sectional profile of the left extendable frame member **145.** In particular embodiments, the left extendable frame member **145** has an outer diameter that is substantially equal to an inner diameter of the upper portion **196** of the left frame member **114.** The respective diameters of the left extendable frame member **145** and upper portion **196** of the left frame member **114** may be chosen to allow the left extendable frame member **145** to translate within the upper portion **196** of the left frame member **114** while maintaining the left extendable frame member **145** in a substantially parallel configuration with the right extendable frame member **141** (e.g., while maintaining a tight fit - e.g., a mating fit - between the left extendable frame member **145** and the upper portion **196** of the left frame member **114)**.

### 3. Connecting member

In particular embodiments, the extendable frame assembly **140** comprises a connecting member that, in various embodiments, provides a rigid connection between the upper ends of the right and left extendable frame members **141, 145.** In the embodiment shown in FIG. 1, the secondary wheel assembly **150** serves this purpose. However, in other embodiments, another suitable structure may serve in this role.

### Secondary Wheel Assembly

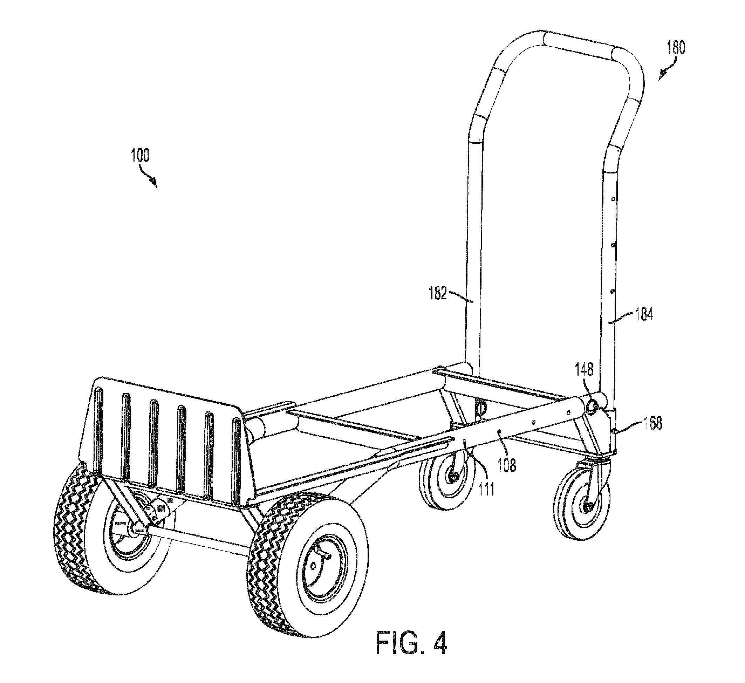

In particular embodiments, the expandable hand truck **100** may further comprise a secondary wheel assembly **150.** As may be understood from FIGS. 4-5, in various embodiments, the secondary wheel assembly **150** is adapted for facilitating the movement of the hand truck **100** relative to a support surface supporting the hand truck while the hand truck **100** is in a horizontal orientation (e.g., while the hand truck is in a platform cart orientation). The secondary wheel assembly **150** may be adapted for cooperating with the primary wheel assembly **130** to facilitate a rolling movement of the hand truck **100** over the support surface.

In various embodiments, the secondary wheel assembly **150** comprises at least one wheel that is rotatably attached adjacent the extendable frame assembly **140.** For example, in the embodiment shown in FIGS. 1-8, the secondary wheel assembly **150** comprises a pair of secondary wheels **158, 160** (in this case, a pair of caster wheels). As shown in FIG. 1, the secondary wheel assembly **150** may be attached, for example, adjacent the extendable frame assembly **140** (e.g., adjacent the right and left extendable frame members **141, 145).**

As may be understood from FIG. 1, in particular embodiments, the secondary wheel assembly **150** comprises a substantially planar central support **156** that is positioned behind an upper portion of the hand truck **100.** In particular embodiments, the central support **156** is substantially parallel to the hand truck's front face. In the embodiment shown in in FIG. 1, the lateral sides of the central support **156** generally align with respective lateral sides of the hand truck **100.**

In various embodiments, the secondary wheel assembly **150** further includes a substantially planar (e.g., rigid) right connector **152** that extends between the right extendable frame member **141** and the right lateral side of the central support **156.** Similarly, the secondary wheel assembly **150** also includes a substantially planar (e.g., rigid) left connector **154** that extends between the left extendable frame member **145** and the left lateral side of the central support **156.**

In particular embodiments, such as the embodiment of FIG. 1, the secondary wheel assembly **150** includes a left handle support **162** that extends outwardly from a front surface of the central support **156** adjacent the central support's left lateral side. The left handle support **162** defines an interior portion that is adapted for snuggly receiving a lower end of a left handle portion **184** of the hand truck's handle **180** (e.g., through an opening **164** in a distal end of the left handle support **162).** As shown in Figure 1, the left handle support may extend outwardly from the front surface of the central support **156** (e.g., at an angle of about 90 degrees from the front surface of the central support **156).**

In the embodiment of FIG. 1, the secondary wheel assembly **150** also includes a right handle support **172** that extends outwardly from a front surface of the central support **156** adjacent the central support's right lateral side. In particular embodiments, the right handle support **172** defines an interior portion that is adapted for snuggly receiving a lower end of a right handle portion **182** of the hand truck's handle **180** (e.g., through an opening **174** in a distal end of the right handle support **172).** The right handle support **172** may extend outwardly from the front surface of the central support **156** (e.g., at an angle of about 90 degrees from the front surface of the central support **156).** In various embodiments, such as the embodiment of FIG. 1, the right and left handle supports **172, 162** are adapted to cooperate to maintain the hand truck's handle **180** in an orientation that is substantially parallel to the hand truck's nose plate **120.**

As shown in FIG. 1, the right and left handle supports **172, 162** may include suitable locking mechanisms for maintaining the ends of the hand truck's handle **180** in a substantially fixed position relative to the hand truck's handle supports **172, 162.** One suitable locking mechanism may be, for example, a pin **168, 178** that extends through an opening **166, 176** in one of the hand truck's handle supports **172, 162** and then through a corresponding hole in a side portion of a respective end of the hand truck's handle **180.** Although the locking mechanism is shown as a pin arrangement in FIG. 1, any other suitable locking mechanism may be used for this purpose.

As shown in FIG. 1, in particular embodiments, the right and left handle supports **172, 162** are spaced apart from each other by a distance corresponding to the distance between the right and left handle portions **182, 184** of the upper cart handle **180.** The exact length of this spacing may vary, for example, from model to model.

### Upper Cart Handle

The hand truck **100** may include any suitable type of upper cart handle **180.** As shown in FIG. 1, the upper cart handle **180** may comprise a substantially U-shaped piece of metal tubing. In the embodiment shown in FIG. 1, the upper cart handle **180** comprises: (1) a right handle portion **182;** (2) a left handle portion **184;** and (3) a central handle portion **186.**

The right handle portion **182** may comprise a substantially straight, elongated tube having, for example, a substantially circular (e.g., circular) profile. In alternative embodiments, the right handle portion **182** may have any other suitable profile (e.g., a square, rectangular, or oval profile). As shown in FIG. 1, the right handle portion **182** may be adapted to fit and slide within the right extendable frame member **141.** In various embodiments, the right handle portion **182** has a cross sectional profile that at least generally corresponds to the cross sectional profile of the right extendable frame member **141.** The dimensions of the inner surface of the right extendable frame member **141** may substantially correspond to (e.g., correspond to) the dimensions of the outer surface of the right handle portion **182** such that the right handle portion **182** can nest within the right extendable frame member **141** with sufficient clearance to facilitate smooth sliding and sufficient snugness to provide rigidity of the hand truck **100** when the upper cart handle **180** is in an extended position.

In particular embodiments, the right extendable frame member **141** is adapted to fit and slide within the right frame member **112.** As may be understood from FIG. 1, when the right handle portion **182** is nested within the right extendable frame member **141** and the right extendable frame member **141** is nested within the right frame member **112,** the right handle portion **182,** the right extendable frame member **141,** and the right frame member **112** are maintained in a triple nested relationship with one another.

In various embodiments, the left handle portion **184** may comprise a substantially straight, elongated tube having, for example, a substantially circular (e.g., circular) profile. In alternative embodiments, the left handle portion **184** may have any other suitable profile (e.g., a square, rectangular, or oval profile). As shown in FIG. 1, the left handle portion **184** may be adapted to fit and slide within the left extendable frame member **145.** In various embodiments, the left handle portion **184** has a cross sectional profile that corresponds to the cross sectional profile of the left extendable frame member **145.** The dimensions of the inner surface of the left extendable frame member **145** may substantially correspond to (e.g., correspond to) the dimensions of the outer surface of the left handle portion **184** such that the left handle portion **184** can nest within the left extendable frame member **145** with sufficient clearance to facilitate smooth sliding and sufficient snugness to provide rigidity of the hand truck **100** when the upper cart handle **180** is in an extended position.

In particular embodiments, the left extendable frame member **145** is adapted to fit and slide within the left frame member **114.** As may be understood from FIG. 1, when the left handle portion **184** is nested within the left extendable frame member **145** and the left extendable frame member **145** is nested within the left frame member **114,** the left handle portion **184,** the left extendable frame member **145,** and the left frame member **114** are maintained in a triple nested relationship with one another.

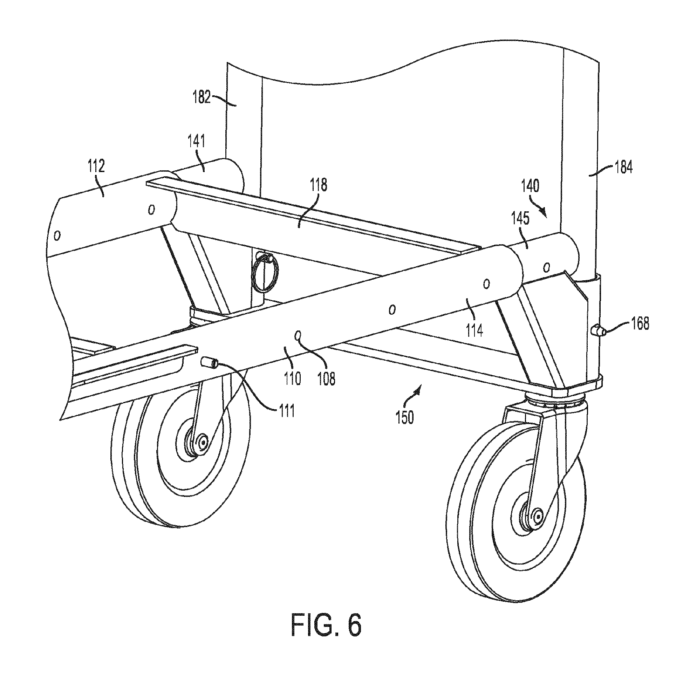

As shown in FIGS. 6-8, one or more spring-loaded buttons **111** may be used to selectively lock the hand truck's frame members in place at different positions relative to the hand truck's frame **110.** Each spring loaded button **111** may include a spring that is adapted for biasing the button **111** away from the spring and through one or more holes **108** in the frame **110.** In alternative embodiments, any other suitable locking mechanism may be used in place of the spring loaded buttons.

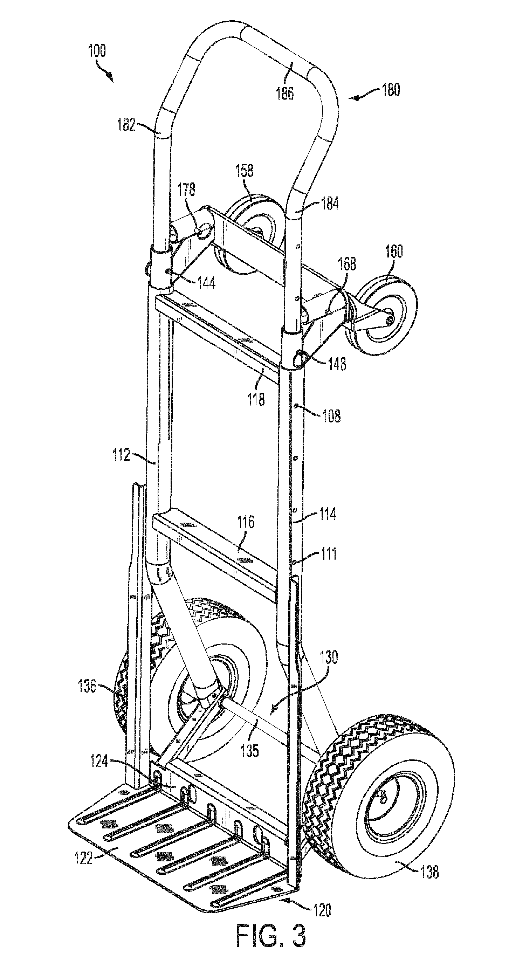

As shown in FIGS. 1-3, the upper cart handle **180** is adapted for selective extension and retraction relative to the hand truck's base portion **101.** FIG. 1 shows a particular embodiment of a hand truck **100** with the upper cart handle **180** in a retracted position. FIG. 3 shows a particular embodiment of a hand truck **100** with the upper cart handle **180** in an extended position. In various embodiments, the upper cart handle **180** further comprises a locking mechanism for locking the upper cart handle **180** at various lengths of extension. In the embodiment shown in FIGS. 1-3, the locking mechanism includes pins **144, 148** that lock the upper cart handle **180** in place. Other embodiments may include any other suitable locking mechanism.

### Alternative Embodiments

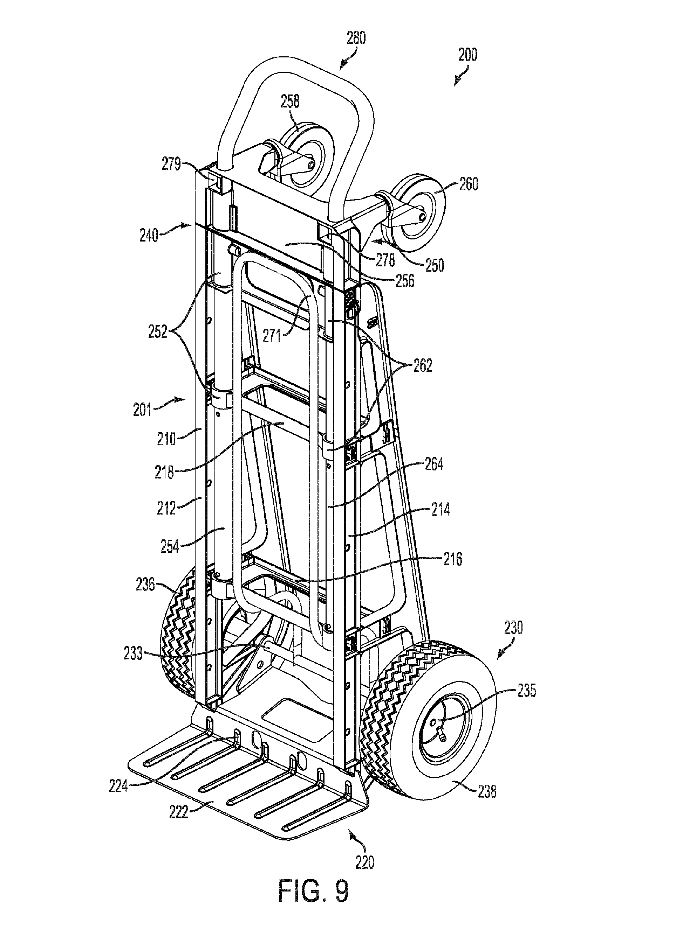

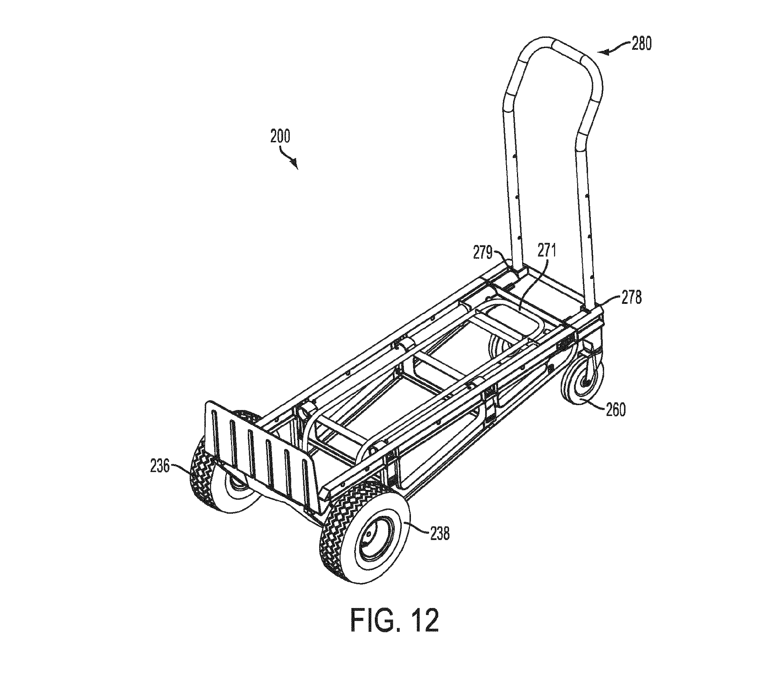

An alternative embodiment of the hand truck is shown in FIGS. 9-15. In this embodiment, much of the hand truck **200** may, for example, be made of a composite material (e.g., plastic). However the basic structure and functionality of the hand truck **200** is similar to that of the hand truck **100** shown in FIGS. 1-8. For example, the embodiment of the hand truck **200** shown in FIGS. 9-15 includes: (1) a hand truck base portion **201;** (2) an extendable frame assembly **240;** (3) a secondary wheel assembly **250;** (4) an upper cart handle **280;** and (5) a lower cart handle **271.** These various components are discussed in greater detail below.

### Hand Truck Base Portion

In particular embodiments, the hand truck base portion **201** may comprise: (1) a frame **210;** (2) a nose plate **220;** and (3) a primary wheel assembly **230.** These various components are discussed in greater detail below.

### 1. Frame

The hand truck base portion **201** may include any suitable type of frame. In the embodiment shown in FIG. 9, this frame **210** includes: (1) a right frame member **212** (which, in this embodiment, is in the form of a substantially planar, substantially triangular truss, which is adapted to stand in a substantially vertical orientation when the hand truck base portion **201** is in an upright orientation); (2) a left frame member **214,** which, in this embodiment, is also a substantially planar, substantially triangular truss, which is adapted to stand in a substantially vertical orientation when the hand truck base portion **201** is in an upright orientation); and (3) a plurality of crossbars **216, 218** that extend between, and physically connect, the right and left frame members **212, 214.**

The various components of the frame **210** may be made of any suitable (preferably sturdy) material (e.g., a suitable metal such as steel or aluminum, or plastic). In various embodiments, these components are secured together using any suitable fastening technique to provide a rigid frame for the hand truck.

### 2. Nose Plate

The hand truck base portion **201** may include any suitable type of nose plate **220.** As shown in FIG. 6, this nose plate **220** may include: (1) a substantially planar support plate **222;** and (2) a substantially planar face plate **224** that extends upwardly adjacent a rear edge of the support plate **222.** The nose plate **220** is adapted to support a load and may be attached adjacent (e.g., to) a lower end of the hand truck base portion's frame **210** in any suitable manner (e.g., using suitable fasteners or welding techniques).

### 3. Primary Wheel Assembly

In particular embodiments, the hand truck's primary wheel assembly **230** is adapted for facilitating the movement of the hand truck **200** relative to a support surface that is supporting the hand truck **200.** In the embodiment shown in FIG. 9, the primary wheel assembly **230** includes an axle support that includes one or more bearings that may be, for example, attached adjacent, or integrated into, the structure of the right and left frame members **212, 214.** In the embodiment shown in FIG. 9, the right and left frame members **212, 214** each include a bearing **233** that defines an opening that is dimensioned for receiving an axle **235** that extends through the opening.

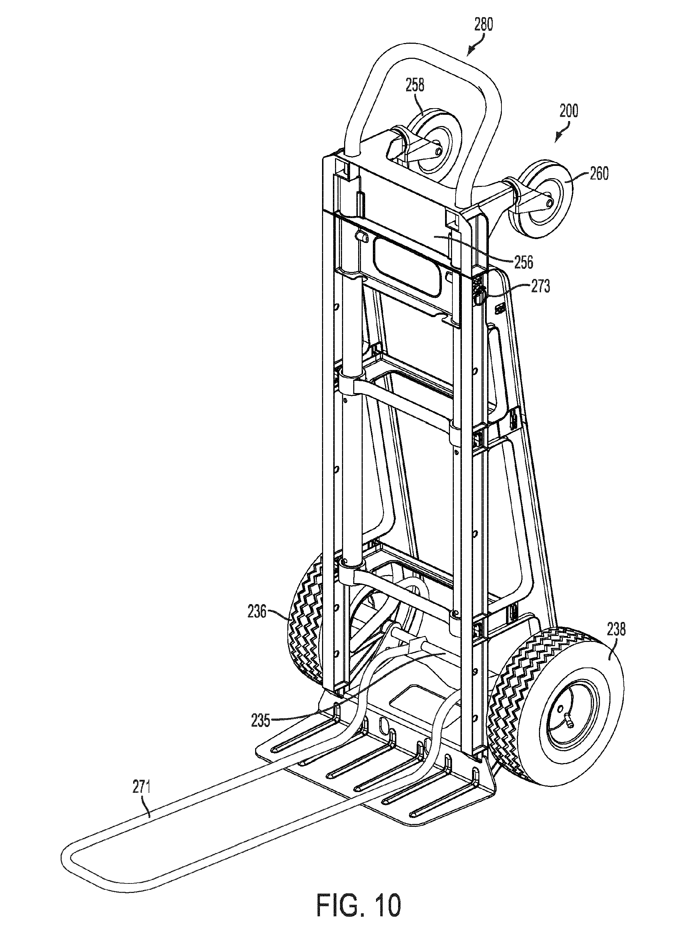

The primary wheel assembly **230** may further include an elongated hand truck axle **235** (See FIG. 9 and 10) that extends through the openings in the right and left bearings **233** so that the axle **235** is substantially parallel to a support surface that supports the hand truck **200** when the hand truck base portion **201** is in an upright orientation. The primary wheel assembly **230** further includes a pair of wheels **236, 238** that are rotatably mounted, respectively, adjacent (e.g., to) opposite ends of the hand truck's axle **235.**

### Extendable Frame Assembly

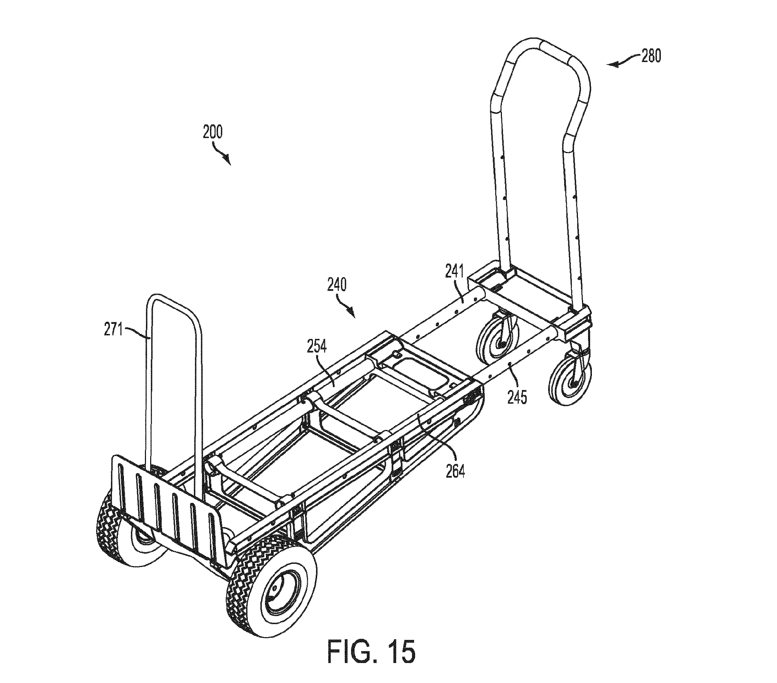

In particular embodiments, the extendable frame assembly **240** is adapted for facilitating the selective conversion of the hand truck **200** between: (1) an unextended configuration and (2) an extended configuration. In the embodiment of FIGS. 9-15, this extendable frame assembly **240** includes: (1) a right extendable frame member **241** (see FIG. 15); (2) a left extendable frame member **245;** and (3) a connecting member that connects the right and left extendable frame members **241, 245** together. These various components are discussed in greater detail below.

### 1. Right Extendable Frame Member

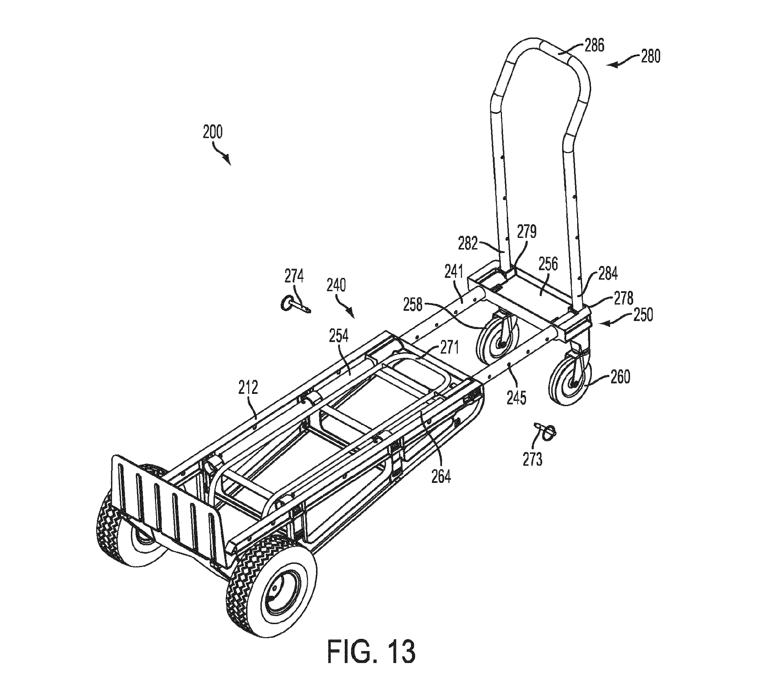

As shown in FIG. 13, the right extendable frame member **241** may comprise an elongated tube (e.g., a tube having a cross-section that, for example, may be substantially in the shape of a square, circle, oval, or any other suitable shape). The right extendable frame member **241** may be made of any suitable (preferably sturdy) material (e.g., a suitable metal such as steel or aluminum, or plastic).

As shown in FIG. 13, the right extendable frame member **241** may be adapted to fit within a first hollow tube **254** (or other suitable structure) that is attached adjacent an interior portion of the frame's right frame member **212** (e.g., via one or more suitable O or C shaped supports **252).** As shown in FIG. 13, the inner cross-sectional profile of the first hollow tube **254** may at least substantially correspond to an outer cross-sectional profile of the right extendable frame member **241.** In particular embodiments, the right extendable frame member **241** has an outer diameter that is substantially equal to an inner diameter of the first hollow tube **254.** The respective diameters of the right extendable frame member **241** and first hollow tube **254** may be chosen to allow the right extendable frame member **241** to translate within the first hollow tube **254** while maintaining the right extendable frame member **241** in a substantially parallel configuration with the first hollow tube **254** (e.g., while maintaining a tight fit - e.g., a mating fit - between the right extendable frame member **241** and the first hollow tube **254).**

### 2. Left Extendable Frame Member

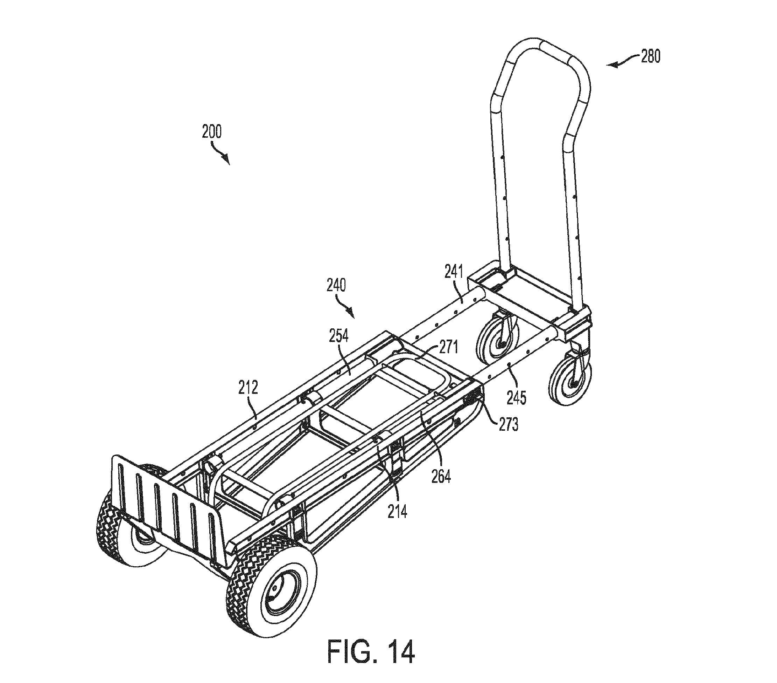

As shown in FIG. 14, the left extendable frame member **245** may comprise an elongated tube (e.g., a tube having a cross-section that, for example, may be substantially in the shape of a square, circle, oval, or any other suitable shape). The left extendable frame member **245** may be made of any suitable (preferably sturdy) material (e.g., a suitable metal such as steel or aluminum, or plastic).

As shown in FIG. 14, the left extendable frame member **245** may be adapted to fit within a second hollow tube **264** (or other suitable structure) that is attached adjacent an interior portion of the frame's left frame member **214** (e.g., via one or more suitable O or C shaped supports **262).** As shown in FIG. 14, the inner cross-sectional profile of the second hollow tube **264** may at least substantially correspond to an outer cross-sectional profile of the left extendable frame member **245.** In particular embodiments, the left extendable frame member **245** has an outer diameter that is substantially equal to an inner diameter of the second hollow tube **264** of the left frame member **214.** The respective diameters of the left extendable frame member **245** and second hollow tube **264** may be chosen to allow the left extendable frame member **245** to translate within the second hollow tube **264** while maintaining the left extendable frame member **245** in a substantially parallel configuration with the second hollow tube **264** (e.g., while maintaining a tight fit - e.g., a mating fit - between the left extendable frame member **245** and the second hollow tube **264).**

### 3. Connecting Member

In particular embodiments, the extendable frame assembly **240** comprises a connecting member that, in various embodiments, provides a rigid connection between the upper ends of the right and left extendable frame members **241, 245.** In the embodiment shown in FIG. 13, the secondary wheel assembly **250** serves this purpose. However, in other embodiments, another suitable structure may serve in this role.

### Secondary Wheel Assembly

In particular embodiments, the expandable hand truck **200** comprises a secondary wheel assembly **250.** In the embodiment shown in FIG. 13, the secondary wheel assembly **250** is adapted for facilitating the movement of the hand truck **200** relative to a support surface supporting the hand truck **200** while the hand truck **200** is in a horizontal orientation (e.g., while the hand truck **200** is in a platform cart orientation, such as the orientation shown in FIG. 13). The secondary wheel assembly **250** may be adapted for cooperating with the primary wheel assembly **230** to facilitate a rolling movement of the hand truck **200** over the support surface.

In various embodiments, the secondary wheel assembly **250** comprises at least one wheel that is rotatably attached adjacent the extendable frame assembly **240.** In the embodiment shown in FIG. 13, the secondary wheel assembly **250** comprises a pair of secondary wheels **258, 260** (in this case, a pair of caster wheels). As shown in FIG. 13, the secondary wheel assembly **250** may be attached, for example, to at least substantially rigidly connect the right and left extendable frame members **241, 245).**

As may be understood from FIG. 13, in particular embodiments, the secondary wheel assembly **250** comprises a substantially planar central portion **256** that extends between the respective upper ends of the right and left extendable frame members **241, 245.** In particular embodiments, the central support portion **256** is substantially parallel to the hand truck's front face. In the embodiment shown in in FIG. 13, the lateral sides of the secondary wheel assembly **250** generally align with respective lateral sides of the hand truck.

In particular embodiments, such as the embodiments of FIGS. 9 and 13, the secondary wheel assembly **250** includes a right handle support **279** that includes a recess defined by the secondary wheel assembly's central support portion **256** adjacent the central support's right lateral side. In particular embodiments, the right handle support **279** is adapted for snuggly receiving a lower end of a right handle portion **282** of the hand truck's handle **280.**

In the embodiment of FIGS. 9 and 13, the secondary wheel assembly **250** also includes a left handle support **278** that includes a recess defined by the secondary wheel assembly's central support portion **256** adjacent the central support portion's left lateral side. In particular embodiments, the left handle support **278** is adapted for snuggly receiving a lower end of a left handle portion **284** of the hand truck's handle **280.** In various embodiments, such as the embodiment of FIGS. 9 and 13, the left and right handle supports **278, 279** are adapted to cooperate to maintain the hand truck's handle **280** in an orientation that is substantially parallel to the hand truck's nose plate **220.**

In various embodiments, the left and right handle supports **278, 279** may include suitable locking mechanisms for maintaining the ends of the hand truck's handle **280** in a substantially fixed position relative to the hand truck's handle supports **278, 279.** One suitable locking mechanism may be, for example, a pin that extends through an opening in one of the hand truck's handle supports and then through a corresponding hole in a side portion of a respective end of the hand truck's handle **280.** In other embodiments, the right and left handle supports **278, 279** and the hand truck's handle **280** may be dimensioned so that the frictional engagement between portions of the ends of the hand truck's handle **280** and the right and left handle supports **278, 279** is sufficient to maintain the handle **280** in the desired orientation.

As shown in FIG. 14, in particular embodiments, the left and right handle supports **278, 279** are spaced apart from each other by a distance corresponding to the distance between the right and left handle portions **282, 284** of the upper cart handle **280.** The exact length of this spacing may vary, for example, from model to model.

### Upper Cart Handle

The hand truck **200** may include any suitable type of upper cart handle **280.** As shown in FIGS. 9-15, the upper cart handle **280** may comprise a substantially U-shaped piece of metal tubing. In the embodiment shown in FIG. 13, the upper cart handle **280** comprises: (1) a right handle portion **282;** (2) a left handle portion **284;** and (3) a central handle portion **286**.

The right handle portion **282** may comprise a substantially straight, elongated tube having, for example, a substantially circular (e.g., circular) cross-sectional profile. In alternative embodiments, the right handle portion **282** may have any other suitable cross-sectional profile (e.g., a square, rectangular, or oval profile). As shown in FIG. 9-11, the right handle portion **282** may be adapted to fit and slide within the right extendable frame member **241.** In various embodiments, the right handle portion **282** has a cross sectional profile that at least generally corresponds to the cross sectional profile of the right extendable frame member **241.** The dimensions of the inner surface of the right extendable frame member **241** may substantially correspond to (e.g., correspond to) the dimensions of the outer surface of the right handle portion **282** such that the right handle portion **282** can nest within the right extendable frame member **241** with sufficient clearance to facilitate smooth sliding and sufficient snugness to provide rigidity of the hand truck **200** when the upper cart handle **280** is in an extended position.

In particular embodiments, the right extendable frame member **241** is adapted to fit and slide within the first tube **254.** In various embodiments, when the right handle portion **282** is nested within the right extendable frame member **241,** and the right extendable frame member **241** is nested within the first tube **254,** the right handle portion **282,** the right extendable frame member **241,** and the first tube **254** are maintained in a triple nested relationship with one another.

Similarly, the left handle portion **284** may comprise a substantially straight, elongated tube having, for example, a substantially circular (e.g., circular) profile. In alternative embodiments, the left handle portion **284** may have any other suitable profile (e.g., a square, rectangular, or oval profile). As shown in FIG. 13, the left handle portion **284** may be adapted to fit and slide within the left extendable frame member **245.** In various embodiments, the left handle portion **284** has a cross sectional profile that at least generally corresponds to the cross sectional profile of the left extendable frame member **245.** The dimensions of the inner surface of the left extendable frame member **245** may substantially correspond to (e.g., correspond to) the dimensions of the outer surface of the left handle portion **284** such that the left handle portion **284** can nest within the left extendable frame member **245** with sufficient clearance to facilitate smooth sliding and sufficient snugness to provide rigidity of the hand truck **200** when the upper cart handle **280** is in an extended position.

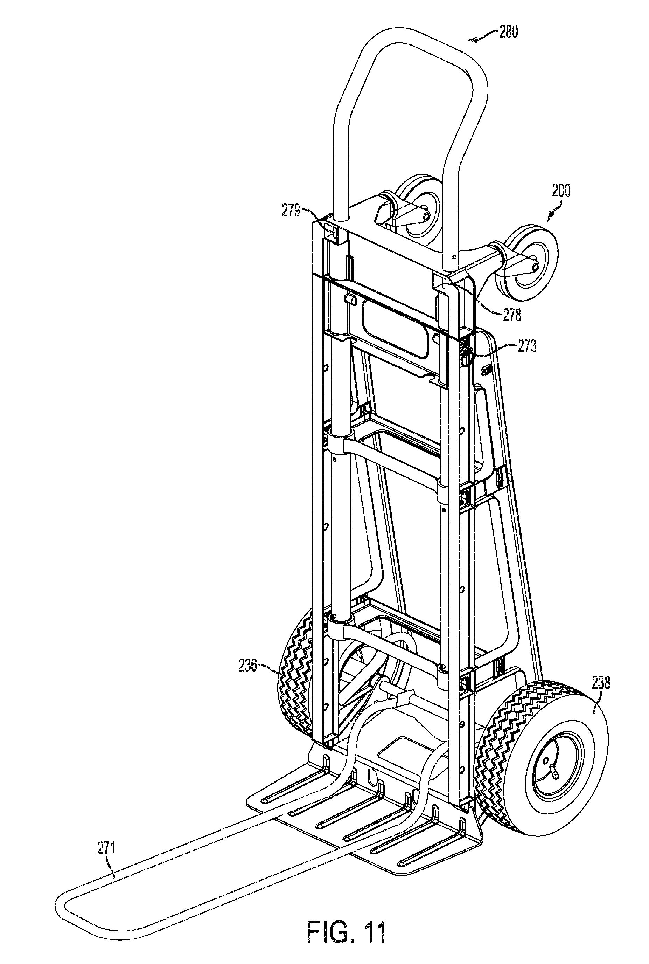

In particular embodiments, the left extendable frame member **245** is adapted to fit and slide within the second tube **264.** As may be understood from FIG. 11, when the left handle portion **284** is nested within the left extendable frame member **245** and the left extendable frame member **245** is nested within the second tube **264,** the left handle portion **284,** the left extendable frame member **245,** and the second tube **264** are maintained in a triple nested relationship with one another.

In various embodiments, the upper cart handle **280** is adapted for selective extension and retraction relative to the hand truck's base portion **201.** FIG. 9 shows a particular embodiment of a hand truck **200** with the upper cart handle **280** in a retracted position. FIG. 11 shows the hand truck **200** with the upper cart handle **280** in an extended position. In various embodiments, the upper cart handle **280** further comprises a locking mechanism for locking the upper cart handle **280** at various lengths of extension. In the embodiment shown in FIGS. 9-11, the locking mechanism may include pins **279, 273** that lock the upper cart handle **280** in place by passing through openings in the sidewall of the right and left handle portions **282, 284** and the right and left extendable frame members **241, 245.** Other embodiments may include any other suitable locking mechanism.

### Lower Cart Handle

As shown in FIGS. 9-15, the hand truck **200** may further include a lower cart handle **271** that may, for example, be useful in restricting the movement of larger loads that are supported by the hand truck **200.** In particular embodiments, the lower cart handle **271** is substantially U-shaped and is rotatably mounted adjacent (e.g., to) the hand truck **200** to rotate from a retracted position shown in FIG. 14 (in which the lower cart handle **271** is substantially parallel to the hand truck's front face) to an extended position shown in FIG. 15 in which the lower cart handle **271** is substantially parallel to the hand truck's nose plate **220.**

### Conversion and Extension of Hand Truck

As may be understood from FIGS. 1-4, to convert the hand truck **100** from a vertical operating arrangement (see FIG. 3) to the horizontal operating arrangement (see FIG. 4), a user may position the hand truck **100** adjacent a support surface so that the hand truck's primary wheels **136, 138** and secondary wheels **158, 160** are all in contact with the support surface. Once the hand truck **100** is in this horizontal operating arrangement, the user may: (1) remove the upper handle assembly **180** from the extendable frame assembly **140;** (2) insert the handle assembly's right handle portion **182** into the right handle support **172;** and (3) insert the left handle portion **184** into the left handle support **162.**

The user may then selectively reposition the hand truck's extendable frame assembly **140** relative to its base portion **101** to adjust the length of the hand truck **100.** This may, for example, allow the user to selectively move the hand truck **100** between a first configuration and a second, extended configuration. As noted above, the extendable frame assembly **140** may be selectively locked in an extended or unextended configuration with any suitable locking mechanism (e.g., a pin).

In various embodiments, similar techniques may also be used to selectively move the hand truck **100** between unextended and extended configurations while the hand truck **100** is in the upright, vertical operating arrangement.

### Hand Truck Adapted for Toolless Assembly

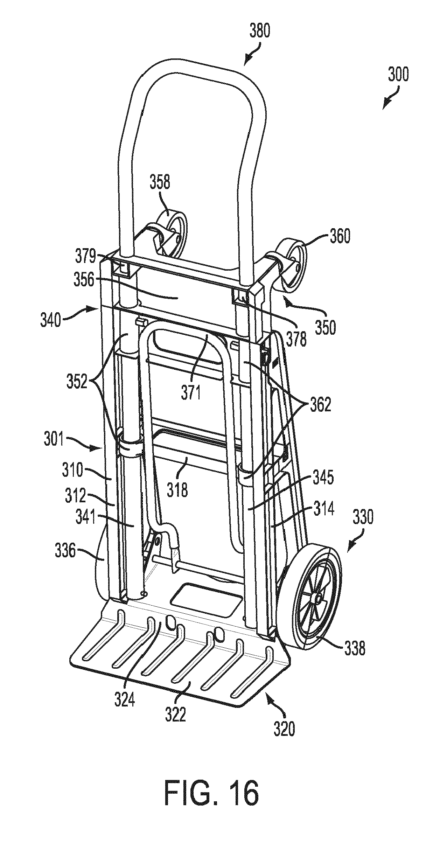

An alternative embodiment of a hand truck is shown in FIGS. 16-17. In this embodiment, the hand truck **300** may, for example, be adapted to allow a user to assemble the hand truck **300** substantially without the use of tools. However the basic structure and functionality of the hand truck **300** is similar to that of the hand truck **200** shown in FIGS. 9-15. For example, the embodiment of the hand truck **300** shown in FIGS. 16-17 includes: (1) a frame **310;** (2) a nose plate **320;** and (3) an extendable frame assembly **340.** These various components are discussed in greater detail below.

### Frame

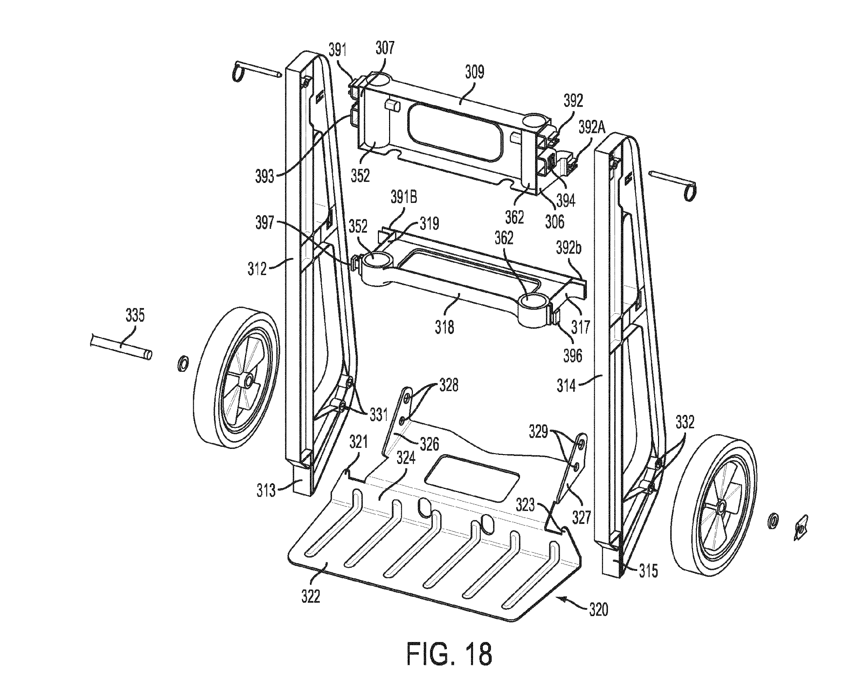

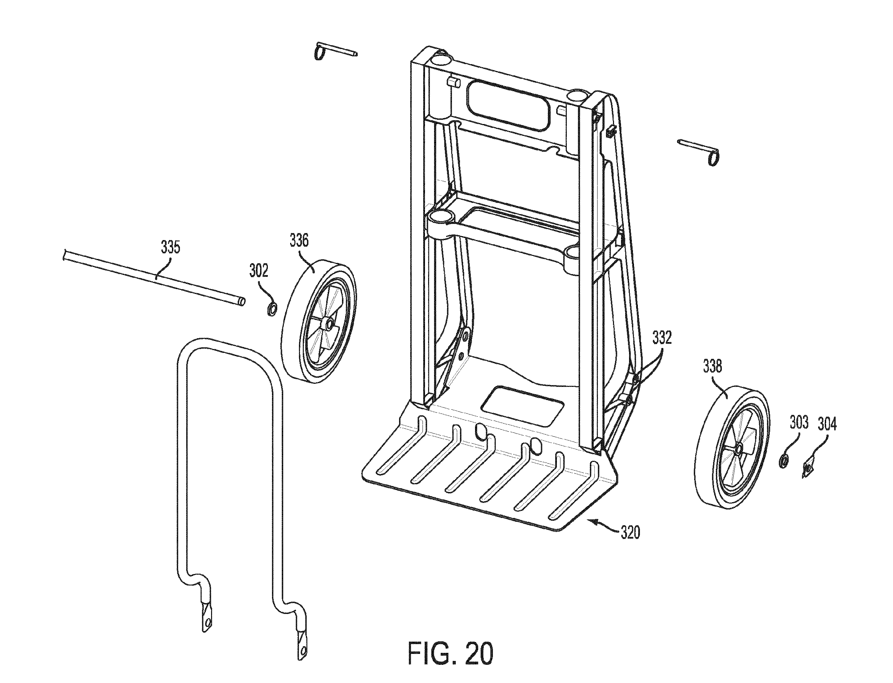

In the embodiment shown in FIGS. 16-24, the frame **310** may be substantially structurally similar to the frame **210** of the embodiment shown in FIG. 9. As may be understood from FIGS. 16-17, the frame **310** comprises: (1) a first side frame assembly **314;** (2) a second side frame assembly **312;** (3) a central connector **318;** and (4) an upper central connector **309** (see FIG. 18). These various components are discussed in greater detail below.

### First Side Frame Assembly

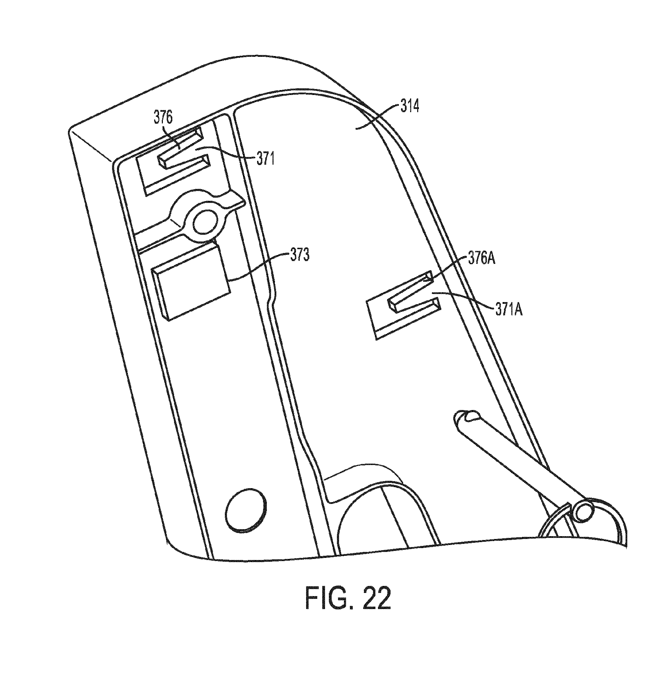

FIG. 22 shows a close up view of an upper portion of the first side frame assembly **314.** In the embodiment shown in this figure, the first side frame assembly **314** defines two first openings **376, 376A** on an upper portion of the first side frame assembly **314** and comprises two first fingers **371, 371A** that are disposed adjacent (e.g., to) each respective first opening **376, 376A.** In particular embodiments, the first openings **376, 376A** have a substantially rectangular or trapezoidal profile. In various embodiments, each first finger **371, 371A** is substantially planar (e.g., planar), substantially trapezoidal (e.g., trapezoidal), and extends substantially within (e.g., within) the plane of a corresponding first opening **376, 376A.** In particular embodiments, the first finger **371, 371A** may be wider at its base than at its distal end. In other embodiments, the first finger **371, 371A** may be substantially rectangular (e.g., rectangular).

The first openings **376, 376A** may be substantially structurally similar (e.g., identical) to one another, and the first fingers **371, 371A** may be substantially structurally similar (e.g., identical) to one another. In particular embodiments, each first finger **371, 371A** may be adapted to flex about the first finger's **371, 371A** base portion (e.g., the first finger's proximal end).

As shown in FIG. 22, in particular embodiments, the first side frame assembly **314** further defines a second opening **373** that is substantially rectangular (e.g., rectangular) on an upper portion of the first side frame assembly **314.** In this embodiment, the two first openings **376, 376A** and the second opening **373** are spaced apart from one another.

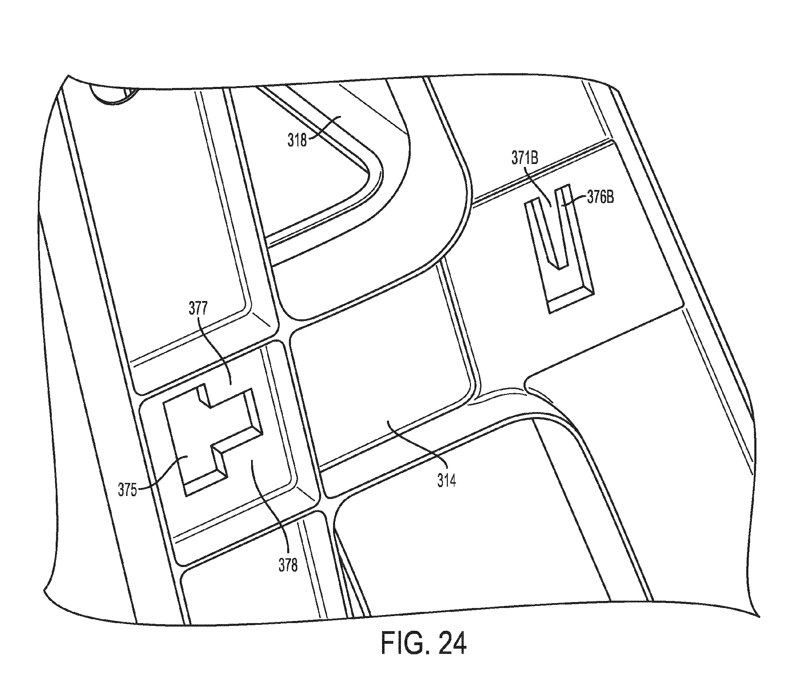

FIG. 24 shows a close up view of a middle portion of the first side frame assembly **314.** As shown in this figure, the first side frame assembly **314** further defines a first opening **376B** and a third opening **375** on a middle portion of the first side frame assembly **314** and comprises a first finger **371B** adjacent the first opening **376B,** and a first **377** and second **378** ledge disposed adjacent the third opening **375.** In this embodiment, the first opening **376B** and first finger **371B** are substantially structurally similar (e.g., structurally identical) to the first openings **376, 376A** and first fingers **371, 371A** defined on the upper portion of the first side frame assembly **314.**

As shown in FIG. 24, the third opening **375** is substantially T-shaped. In this embodiment, the first **377** and second **378** ledges are substantially rectangular (e.g., rectangular) and extend substantially within the plane of the third opening **375** substantially adjacent (e.g., to) two adjacent corners of the third opening **375.** In particular embodiments, the first opening **376B** and third opening **375** may be spaced a distance apart from one another, and may be disposed adjacent respective side portions of the first side frame assembly **314.** In the embodiment shown in FIG. 24, the first opening **376B** and third opening **375** are spaced apart a distance substantially equal (e.g., equal) to the width of the central connector **318.**

As shown in FIG. 18, the first side frame assembly **314** defines a pair of substantially circular (e.g., circular) first axle openings **332** adjacent a lower end of the first side frame assembly **314.** In particular embodiments, the first axle openings **332** are sized to correspond to the radius of a hand truck's axle **335.**

In the embodiment shown in FIG. 18, the first side frame assembly **314** defines a first nose plate support face **315** adjacent a bottom portion of a front face of the first side frame assembly **314** that is substantially flat (e.g., flat). In this embodiment, the first nose plate support face **315** extends between the inner and outer lateral faces of the first side frame assembly **314** and extends at least about two inches along a lower portion of the first side frame assembly's front face. In particular embodiments, the first nose plate support face **315** is adapted to be sized such that the height of the first nose plate support face corresponds to the height of the nose plate's face plate **324.**

### Second Side Frame Assembly

In the embodiment shown in FIG. 18, the second side frame assembly **312** is substantially structurally similar (e.g., structurally identical) to the first side frame assembly **314.**

### Central Connector

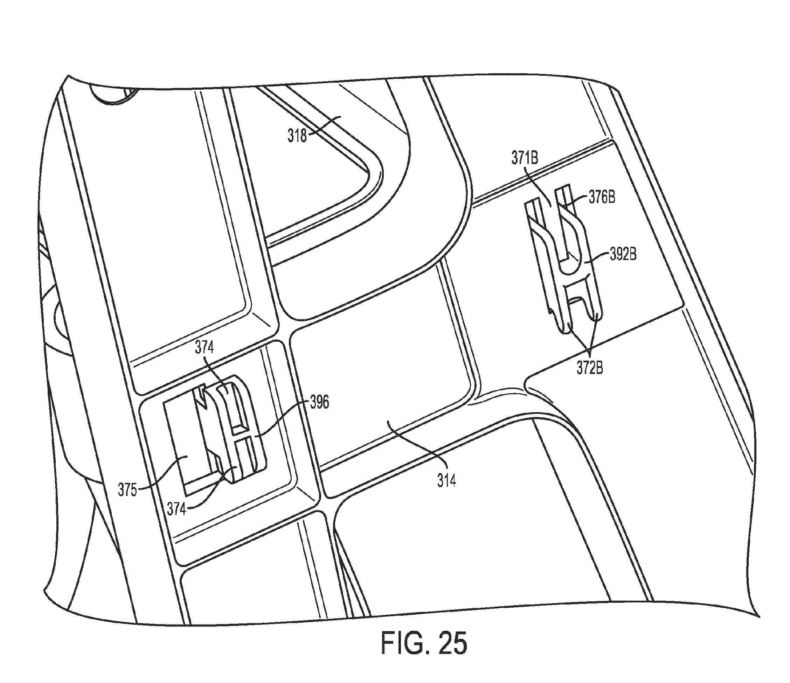

In the embodiment shown in FIG. 18, the central connector **318** comprises a first projection **392B** that extends from a first side **317** of the central connector **318** and a second projection **396** that extends from the first side **317** of the central connector **318.** As may be understood from FIG. 25, the first projection **392B** is a substantially H-shaped (e.g., H-shaped) projection comprising two lips **372B** that extend substantially perpendicularly (e.g., perpendicularly) downward from the first projection **392B** beyond a first edge of the first projection **392B.** In other embodiments, the first projection **392B** may comprise a single lip, or more than two lips. In various embodiments, the first projection **392B** may have a profile that at least generally corresponds to the profile of the first opening **371B.**

In this embodiment, the second projection **396** is a substantially H-shaped projection that comprises two lips **374** that extend substantially perpendicularly (e.g., perpendicularly) from opposing ends of the second projection **396.** In the embodiment shown in FIGS. 24 and 25, the first projection **392B** and second projection **396** are spaced apart to correspond to the spacing between the first side frame assembly's **314** first opening **376B** and second opening **375.**

In the embodiment shown in FIG. 18, the central connector's second side **319** is substantially structurally similar (e.g., structurally identical) to the central connector's **318** first side **317.**

### Upper Central Connector

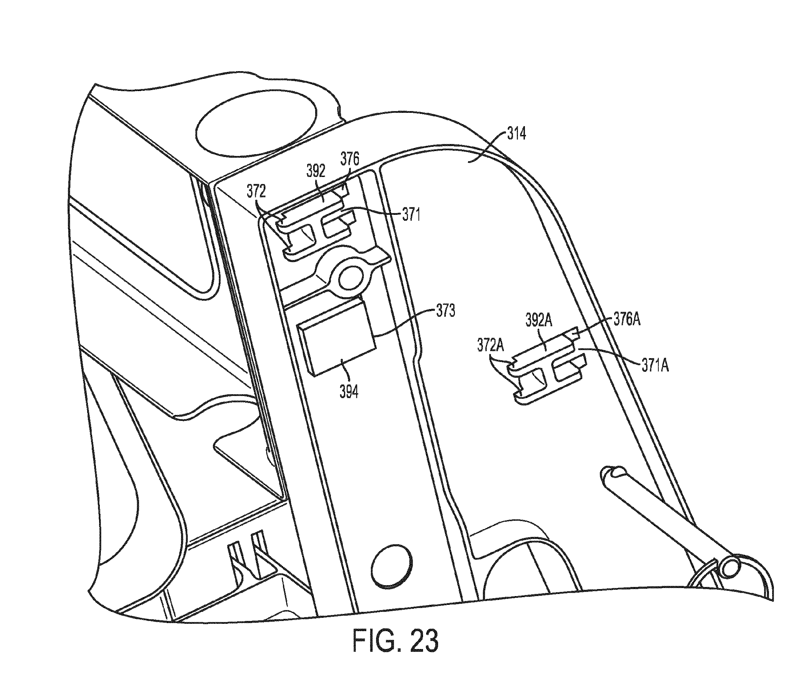

In the embodiment shown in FIG. 18, the upper central connector **309** comprises two first projections **392, 392A** that extend from a first lateral side **306** of the upper central connector **309** and that are structurally similar (e.g., structurally identical) to the central connector's first projection **392B.** The upper central connector **309** also comprises a substantially rectangular projection **394** that extends substantially perpendicularly from the upper central connector's **309** first side **306.** In this embodiment, the two first projections **392, 392A** and the substantially rectangular projection **394** are arranged on a first lateral side of the upper central connector **309** such that the positions of the two first projections **392, 392A** and the substantially rectangular projection **394** relative to one another substantially correspond to the relative positions of the two first openings **376, 376A** and the second opening **373** of the first side frame assembly **314** (see FIG. 23).

In the embodiment shown in FIG. 18, the upper central connector's second side **307** is substantially structurally similar (e.g., identical) to the upper central connector's **309** first side **306.**

### Nose Plate

In the embodiment shown in FIG. 18, the nose plate **320** may be substantially structurally similar to the nose plate **220** of the embodiment shown in FIG. 9. As may be understood from FIG. 18, in particular embodiments, the nose plate **320** comprises: (1) a first lip **323** that extends upwardly from a first lateral end of the face plate **324** substantially in the same plane of the face plate **324;** a second lip **321** that extends upwardly from a second lateral end of the face plate **324** substantially in the same plane of the face plate **324;** (3) a first axle support **327** that extends substantially vertically (e.g., vertically) from a rear side portion of the nose plate **320** and that defines at least one first axle opening **329;** and (4) a second axle support **326** that extends substantially vertically (e.g., vertically) from a rear side portion of the nose plate **320** and that defines at least one second axle opening **328.**

In the embodiment shown in FIG. 18, the first and second lip **323, 321** are substantially co-planar (e.g., co-planar) and are disposed substantially perpendicular (e.g., perpendicular) to both the support plate **322** and to the support surface supporting the hand truck **300** when the hand truck **300** is in a vertical orientation. In this embodiment, the first and second lips **323, 321** each define an interior face that is substantially flat (e.g., flat). As may be understood from FIG. 18, the interior faces of the first and second lips **323, 321** are substantially co-facing (e.g., co-facing).

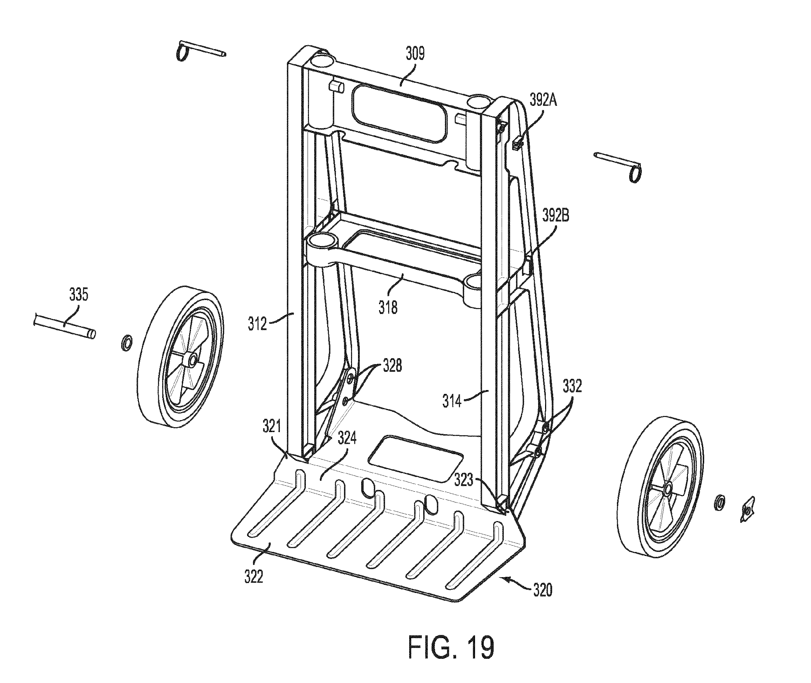

As shown in FIG. 18, the first axle support **329** and second axle support **328** are substantially planar (e.g., planar), substantially triangular (e.g., triangular) axle supports. In particular embodiments, the first and second axle supports **327, 326** are substantially structurally similar (e.g., structurally identical). As may be understood from Figure 19, the first and second axle supports **327, 326** are disposed substantially parallel (e.g., parallel) to one another and substantially parallel (e.g., parallel) to the first and second side frame assemblies **314, 312.** In the embodiment shown in FIG. 18, the first axle support **327** defines two first axle support openings **329** that are substantially circular (e.g., circular) openings sized to correspond to the radius of an axle **335.** In this embodiment, the second axle support **326** defines two second axle support openings **328** that correspond in size and shape to the first axle support openings **329.** In particular embodiments, the center of the respective radii of the first axle support openings **329** are substantially co-linear (e.g., co-linear) with the center of the respective radii of the corresponding second axle support openings **328.**

### Extendable Frame Assembly

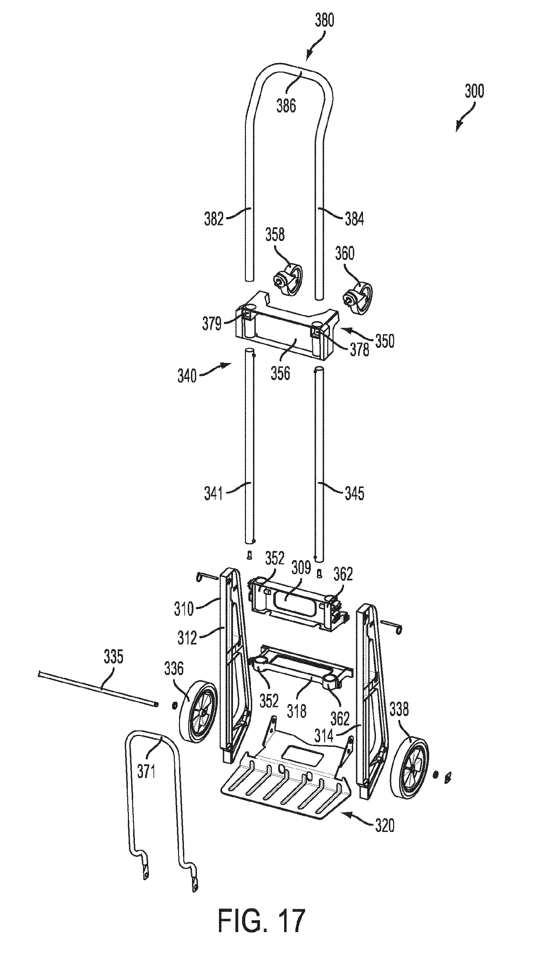

In the embodiment shown in FIG. 16, the extendable frame assembly **340** may be substantially structurally similar to the extendable frame assembly **240** of FIG. 9. As may be understood from FIGS. 16 and 17, the extendable frame assembly **340** includes: (1) a right extendable frame member **341;** (2) a left extendable frame member **345;** and (3) a connecting member **356** that extends between the right and left extendable frame members **341, 345** and connects the right and left extendable frame members **341, 345** together.

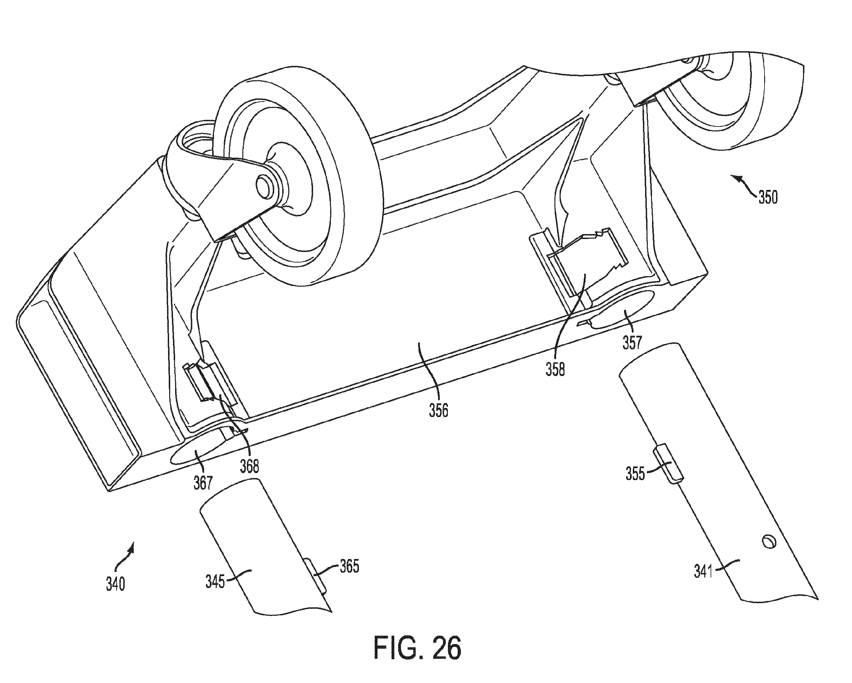

As shown in FIG. 26, in particular embodiments, the right extendable frame member **341** comprises a first tab **355** that extends substantially radially outward a distance from an upper end of an outer surface of the right extendable frame member **341.** In the embodiment shown in FIG. 26, the first tab **355** is substantially planar (e.g., planar) and substantially rectangular. In this embodiment, the left extendable frame member **345** comprises a second tab **365** that is substantially structurally similar (e.g., identical) to the first tab **355** and disposed in substantially the same general location on the left extendable frame member **345** in which the first tab **355** is disposed on the right extendable frame member **341.**

In the embodiment shown in FIG. 26, the central connector **356** defines a first extendable frame member support **357** on the right side of the bottom surface of the central connector **356** and defines a first tab notch **358** adjacent the first extendable frame member support **357.** As may be understood from FIG. 26, the right extendable frame member support **357** has a profile that corresponds to the profile of the right extendable frame member **341** including the first tab **355.** In this embodiment, the first tab notch **358** has a substantially rectangular profile that arcs along a curve having a radius that corresponds to the radius of the right extendable frame member **341** and narrows at one end. In particular embodiments, the first tab notch **358** is sized at least as wide as the first tab **355** at the first tab notch's **358** widest point. The first tab notch's **358** narrow end may be adapted to be sized sufficiently wide enough to allow the first tab **355** to rotate into the first tab notch's **358** narrow end and sufficiently narrow enough to squeeze and lock the first tab **355** in place when the first tab **355** is disposed within the first tab notch's **358** narrow end. In particular embodiments, the first tab notch **358** may include one or more ridges adjacent its narrow end to assist in locking the first tab **355** in place adjacent the first tab notch **358.**

As shown in FIG. 26, the central connector **356** defines a second extendable frame member support **367** and second tab notch **368** that are substantially structurally similar (e.g., identical) to the first extendable frame member support **357** and first tab notch **358.**

### Toolless Assembly of Various Components of an Exemplary Hand Truck

As may be understood from FIGS. 17-29, the hand truck **300** may be adapted to allow a user to assemble the hand truck **300** substantially without the use of tools.

### Frame Assembly

FIGS. 18-19 and 22-25 depict the assembly of a hand truck frame **310.** As shown in FIG. 23, to assemble a hand truck frame **310,** a user may insert the first projections **392, 392A** of the upper central connector **309** into the corresponding first openings **376, 376A** with the first lips **372, 372A** oriented facing away from their respective first fingers **371, 371A,** causing the first projections' respective central portions to engage the respective first fingers **371, 37A** and to exert a force on the first fingers **371, 371A** causing the first fingers **371, 371A** to flex about the first fingers' **371, 371A** respective base portions. As the first fingers **371, 371A** flex, they exert a force on the first projections' central portions that opposes the first projections' central portions' force on the first fingers **371, 371A,** and pushes the first projections **392, 392A** laterally away from the first fingers **371, 371A** (e.g., away from the base of the first fingers **371, 371A)** causing the first lips **372, 372A** to engage an edge that defines the first openings **376, 376A.** As the user continues to push the first projections **392, 392A** through the first openings **376, 376A,** the first fingers **371, 371A** continue to flex and urge the first lips **372, 372A** laterally until the first lips **372, 372A** clear the edges that define the first opening **376, 376A** and overlap with and engage a portion of the outside face of the first side frame assembly **314.**

As may be understood from FIG. 23, when the first projections **392, 392A** are fully inserted in the first openings **372, 372A** the first fingers **371, 371A** may return to (e.g., snap back to) the first fingers' **371, 371A** unflexed position and engage the side of the first projections **392, 392A** opposite their respective first lips **372, 372A.** In particular embodiments, the first projections **392, 392A** each define a cutout opposite their respective first lips **372, 372A,** and the first fingers **371, 371A** are adapted to be disposed within the respective cutouts when the first projections **392, 392A** are in an attached position within the first openings **372, 372A.**

In particular embodiments, the first fingers **371, 371A** may be sized to correspond to the dimensions of the cutout plus a length of the first lips **372, 372A.** As the first projections **392, 392A** are at least fully inserted in the first openings **376, 376A,** a user may snap the substantially rectangular projection **394** into the second opening **373.** The first fingers **371, 371A** and first lips **372, 372A** are adapted to cooperate to lock the first projections **392, 392A** in the first openings **376, 376** and maintain the first side assembly **314** adjacent the upper central connector **309.** In the embodiment shown in FIG. 23, the substantially rectangular projection **394** may be adapted to maintain the upper central connector **309** in a substantially fixed lateral position relative to the first side frame assembly **314.**

As may be understood from FIG. 25, a user may attach the central connector **318** to the first side frame assembly **314** by inserting the second projection **396** into the third opening **375** and sliding the second projection **396** laterally such that the second projection's lips **374** engage with the first and second ledges **377, 378,** which are adapted to cooperate with the second projection's lips **374** to maintain the central connector **318** in a substantially fixed position adjacent the first side frame assembly **314.** The user may then insert the central connector's **318** first projection **392B** into the corresponding first opening **396B** in substantially the same manner as the user inserted the upper central connector's **309** first projections **392, 392A** into the corresponding first openings **376, 376A.** During this process, the first projection **392B** is locked in place in the manner described above in regard to the upper central connector's first projections **392, 392A.**

A user may then attach the second side frame assembly **312** to the second ends of the central connector **318** and upper central connector **309** in substantially the same manner (e.g., the same way) in which the user attached the first side frame assembly **314** to the first ends of the central connector **318** and upper central connector **314.**

### Nose Plate Assembly

FIGS. 18-21 show exemplary steps for attaching a nose plate **320** to a hand truck's frame **310.** As may be understood from FIGS. 18 and 19, a user may align the first axle support openings **329** with the corresponding first axle openings **332** of the first side frame assembly **314** and align the second axle support openings **328** with the corresponding second side frame assembly's second axle openings **331.** A user may then insert an axle **335** (e.g., in the following sequence) through: (1) the second axle opening **331;** (2) the second axle support opening **328;** (3) the first axle support opening **329;** and (4) the first axle opening **332.**

The user may then affix two wheels to opposing ends of the axle **335** using any suitable means. For example, the user may use one or more clips **304** or other suitable fasteners to retain the axle **335** and wheels **336, 338** in a fixed, rotatable relationship to the hand truck. In various embodiments, the one or more clips may be installed without using tools.

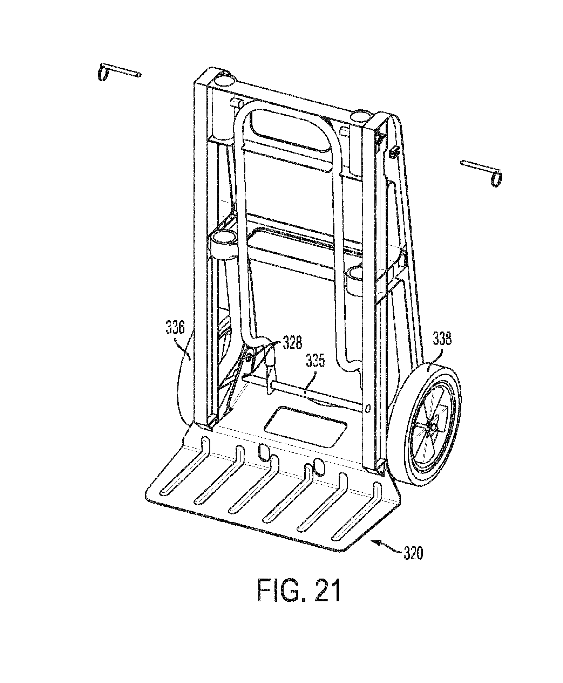

In particular embodiments, the axle **335** comprises an integrated stopper portion adjacent its first end and a circumferential recess adjacent its second end that is adapted to receive a portion of a retaining clip **304.** In such an embodiment, the stopper and retaining clip **304** may cooperate to maintain the axle **335** in a substantially fixed lateral position relative to the hand truck.. As may be understood by FIG. 21, in this embodiment, the axle **335** is adapted to support a rear portion of the nose plate **320.**

As may be understood from FIGS. 18 and 19, the face plate **324** is adapted to engage the first and second side frame assemblies' first and second nose plate support faces **315, 313** that exert a force against a rear portion of the face plate **324** that supports the nose plate's **320** support plate **322** and face plate **324.** When a load is placed on the nose plate's support plate **322,** the face plate **324** is adapted to exert a force against the first and second nose plate support faces **315, 313,** which are adapted to exert an equal opposing force back on the face plate **324.** The equal opposing force serves to support the nose plate **320,** which supports the load.

When the nose plate **320** is attached to the hand truck **300,** the first lip **323** is adapted to engage at least a portion of an outer lateral face of the first side frame assembly **314.** Similarly, the second lip **321** is adapted to engage at least a portion of an outer lateral face of the second side frame assembly **312.** In this arrangement, the first and second lips **323, 321** are adapted to cooperate to restrict the lateral movement of the nose plate **320** relative to the hand truck **300.**

### Extendable Frame Assembly

FIGS. 26-28 show the steps of assembling the extendable frame assembly in a particular embodiment. As may be understood from FIGS. 26-28, a user may insert the respective ends of the right and left extendable frame members **341, 345** into the connecting member's first and second extendable frame member supports **357, 367.** As may be understood from FIG. 26, a user may orient the right and left extendable frame members **341, 345** such that the profiles of the right and left extendable frame members **341, 345** including the first and second tab **355, 365** are substantially aligned with the first and second extendable frame member supports **357, 367** before inserting the right and left extendable frame members **341, 345** into the first and second extendable frame member supports **357, 367.**

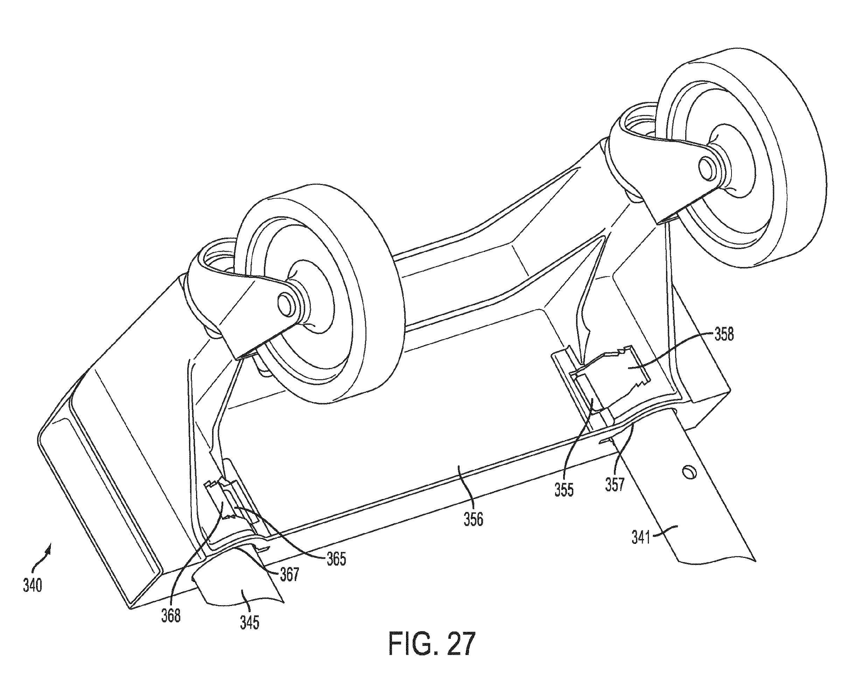

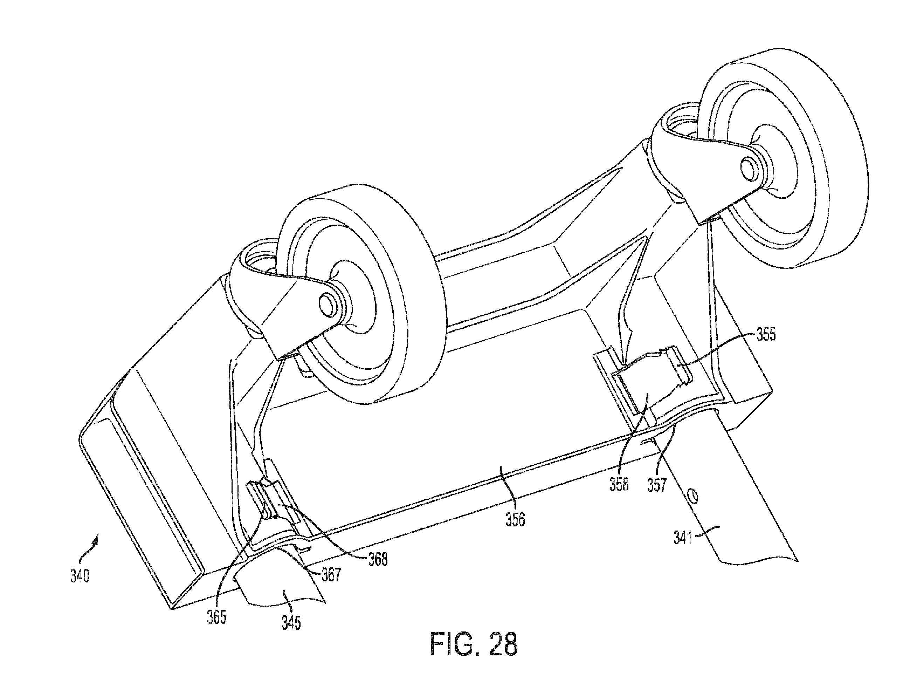

As may be understood from FIG. 27, when the right and left extendable frame members are fully inserted into the first and second extendable frame member supports **357, 367,** the first tab **355** substantially aligns with the first tab notch **358,** and the second tab **365** substantially aligns with the second tab notch **368.** In particular embodiments, the right and left extendable frame members **341, 345** are adapted to allow a user to rotate the right and left extendable frame members **341, 345** within the first and second extendable frame member supports **357, 367** such that the first and second tab **355, 365** rotate within the first and second tab notches **358, 368.** In the embodiment shown in FIGS. 27 and 28, the first and second tabs **355, 365** are adapted to rotate at least about thirty degrees within the first and second tab notches **358, 368.**

As may be understood from FIGS. 27 and 28, as a user rotates the right extendable frame member **341,** the first tab **355** rotates toward the narrow end of the first tab notch **358** until the first tab **355** begins to engage with the edges that define the first tab notch **358.** As the first tab **355** continues to rotate, the edges that define the first tab notch **358** engage with and exert equal opposing forces on opposing ends of the first tab **355** that cooperate to lock the first tab **355** as well as the right side extendable frame member **341** in place. In this embodiment, the second tab **365** is adapted to lock within the second tab notch **368** in substantially the same manner. With the first and second tabs **355, 365** locked in place, the right extendable frame member **341,** the left extendable frame member **345,** and the connecting member **356** may, for example, be adapted to form a sturdy extendable frame for the hand truck **300.**

### Assembly of Assembled Frame, Nose Plate, and Extendable Frame Assembly

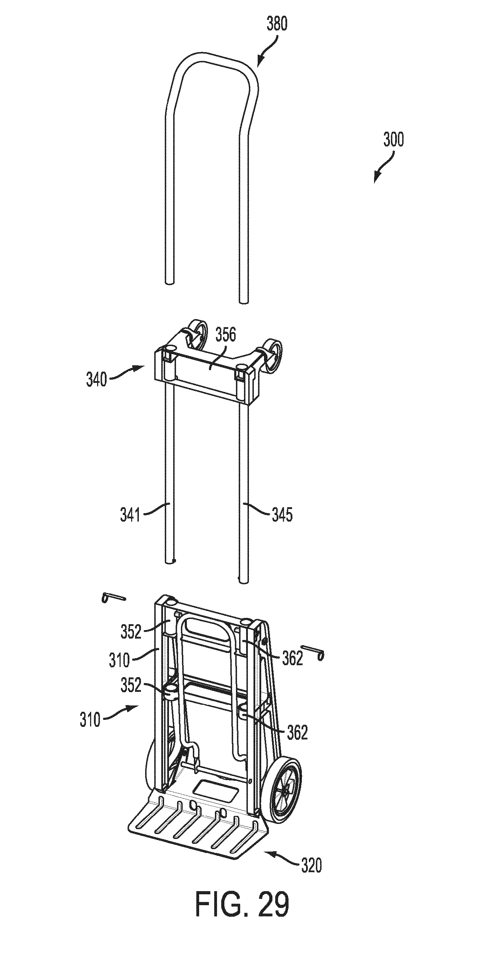

As may be understood form Figure 29, once a user has assembled the hand truck frame **310,** nose plate **320,** and extendable frame assembly **340,** the user may combine these components, along with an upper cart handle **380** into an assembled hand truck **300.** To assemble the hand truck **300,** the user may respectively insert the extendable frame assembly's **340** right and left extendable frame members **341, 345** into the right and left connectors **352, 362.** The user may then insert the upper cart handle **380** into the extendable frame assembly **340** and lock the upper cart handle using any suitable locking mechanism (e.g., a pin).

### Alternative Embodiments

Alternative embodiments of the hand truck **100** may comprise components that are, in some respects, similar to the various components described above. Selected distinguishing features of these alternative embodiments are discussed below.

### Nose Plate with Rolled Top Edge

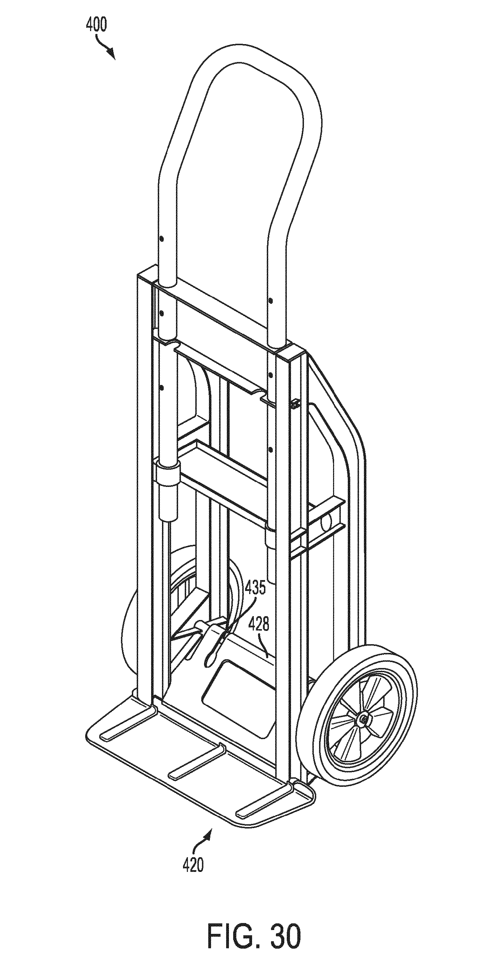

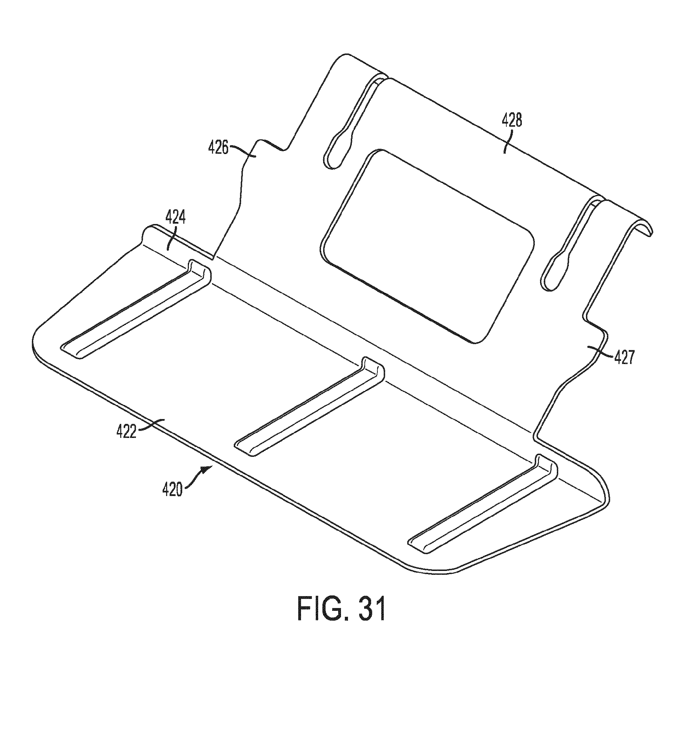

In particular embodiments, such as the embodiment shown in FIGS. 30-31, a hand truck **400** may include a nose plate **420** with a rolled top edge **428.** As shown in FIG. 31, the rolled top edge **428** may extend rearwardly from a rear portion of the nose plate **420** in a curve that has a radius that at least generally corresponds to the radius of an axle. As may be understood from FIG. 30, the rolled top edge **428** may be adapted to engage (e.g., hookedly engage) an axle **435** and cooperate with the axle **435** to support a rear portion of the nose plate **420.** In particular embodiments, the nose plate **420** may further comprise a first and second flange **426, 427** that extend substantially within a plane of the rear portion of the nose plate **420** in opposing lateral directions and are adapted to cooperate with the hand truck's frame to support the nose plate's support plate **422.** In various embodiments, the first and second flanges **426, 427** may be disposed within openings defined in the hand truck's frame that correspond to the dimensions of the first and second flanges **426, 427.** The first and second flanges **426, 427** may be adapted to engage the portions of the hand truck's frame that define the corresponding openings, and the hand truck's frame may be adapted to exert opposing forces on the first and second flanges **426, 427** to maintain the nose plate **420** in place adjacent a lower end of the hand truck's frame.

### Modular Tool Inserts

In particular embodiments, one or more of the hand truck's cross members (e.g., the central connector **318** or the upper central connector **309)** may include a task module that is adapted to be selectively attached (e.g., using hooks, snaps, or any other suitable selective mechanical fastening arrangement) adjacent the cross member. Such task modules may be physically configured to assist a user in performing one or more specialized tasks, such as painting, performing routine repairs, or gardening. In various embodiments, the central connector **318** (or other hand truck component) is adapted to selectively support any of a plurality of different task modules (e.g., a paint bucket module may define at least one support opening that is adapted to support a paint bucket). This may allow a user to selectively tailor the current structure of the hand truck to assist in completing a particular kind of task.

### Conclusion

Many modifications and other embodiments of the invention will come to mind to one skilled in the art to which this invention pertains having the benefits of the teachings presented in the foregoing descriptions and the associated drawings. For example, as will be understood by one skilled in the relevant field in life of this disclosure, the invention may take form in a variety of different mechanical and operational configurations. Therefore, it is to be understood that the invention is not to be limited to the specific embodiments disclosed and that modifications and other embodiments are intended to be included within the scope of the appended exemplary concepts. Although specific terms are employed herein, they are used in a generic and descriptive sense only and not for the purposes of limitation.

## Claims

1. A hand truck (100) comprising:
(A) a frame assembly (101) comprising:
a first side frame assembly (112);
a second side frame assembly (114) that is spaced apart from and
co-facing the first side frame assembly; and
at least one central connector (116,118) that extends between the first side frame assembly and the second side frame assembly;
(B) a nose plate (122) disposed adjacent a lower end (193,197) of the frame assembly; and
(C) a wheel assembly (130) that is attached adjacent a lower end of the frame assembly, the wheel assembly comprising at least one wheel (136,138) that is adapted to facilitate the rolling movement of the hand truck over a support surface supporting the hand truck, wherein:
the nose plate is adapted to allow a user to attach the nose plate to the hand truck substantially without the use of tools.

2. The hand truck of Claim 1, wherein:
the wheel assembly (230) comprises an axle (233) that is adapted to support the at least one wheel; and
the axle is adapted to support a rear portion of the nose plate (222).

3. The hand truck of Claim 1 or 2, wherein:
at least a first portion (321) of the nose plate (322) is adapted to engage at least a portion (313) of the first side assembly (312);
at least a second portion (323) of the nose plate (322) is adapted to engage at least a portion (315) of the second side assembly (314);
the at least a portion of the first side assembly is adapted to cooperate with the at least a first portion of the nose plate to support the first side of the nose plate; and
the at least a portion of the second side assembly is adapted to cooperate with the at least a second portion of the nose plate to support the second side of the nose plate.

4. The hand truck of Claim 3, wherein:
the nose plate (422) comprises a rolled top edge (428) adjacent the rear portion of the nose plate that has a radius that corresponds to a radius of the axle (435); and
the rolled top edge is adapted to cooperate with the axle to support the rear portion of the nose plate; and preferably wherein the rolled top edge is adapted to hook over the axle.

5. The hand truck of Claim 1, 2, 3 or 4, wherein:
the nose plate defines at least one axle support (328,329) adjacent a rear portion of the nose plate; and
the at least one axle support is adapted to cooperate with the axle (335) to support the rear portion of the nose plate.

6. The hand truck of any preceding claim, wherein:
the nose plate comprises a first flange that protrudes from a first side of the nose plate;
the nose plate comprises a second flange that protrudes from a second side of the nose plate;
the first side frame assembly defines a first locking web adjacent a lower portion of an interior portion of the first side frame assembly;
the second side frame assembly defines a second locking web adjacent a lower portion of an interior portion of the second side frame assembly;
the first flange is adapted to engage the first locking web and the second flange is adapted to engage the second locking web; and
the first flange is adapted to cooperate with the first locking web and the second flange is adapted to cooperate with the second locking web to support the nose plate; or wherein
the first side frame assembly (312) defines a first nose plate support face (313) adjacent a lower portion of a front portion of the first side frame assembly;
the second side frame assembly (314) defines a second nose plate support face (315) adj acent a lower portion of a front portion of the second side frame assembly;
the nose plate comprises a faceplate (324) having a first lateral end (321) and a second lateral end (323); and
the nose plate is adapted so that, when it is installed adjacent the rest of the hand truck: (1) the first end of the faceplate engages the first nose plate support face and the second end of the faceplate engages the second nose plate support face; and (2) the first end of the faceplate cooperates with the first nose plate support face and the second end of the faceplate cooperates with the second nose plate support face to support the nose plate.

7. The hand truck of Claim 6, wherein:
the first end of the faceplate comprises a first lip (321) that extends adjacent an outside edge of the first side frame assembly (312) when the nose plate is attached to the hand truck;
the second end of the faceplate comprises a second lip (323) that extends adjacent an outside edge of the second side frame assembly (314) when the nose plate is attached to the hand truck;
the first lip is adapted to engage the outside edge of the first side frame assembly to maintain the nose plate in a substantially fixed lateral position relative to the frame assembly; and
the second lip is adapted to engage the outside edge of the second side frame assembly to maintain the nose plate in a substantially fixed lateral position relative to the frame assembly.

8. An assembly, preferably of a handtruck, comprising:
(a) a first part (312,314) defining at least one opening (376) and comprising a finger (371) that is adapted to flex and that is disposed adjacent the at least one opening; and
(b) a second part (309,318) comprising at least one projection (391-394,396,397) that extends from the second part and that comprises a first end (372) having a lip and a second end, wherein:
the at least one projection (392) is adapted to allow a user to insert the at least one projection into the at least one opening (376) and to thereby flex the finger (371) about a base of the finger away from a home position of the finger as the user inserts the at least one projection through the at least one opening;
the lip (372) of the at least one projection (392) is adapted to engage at least a portion of an outer face of the first part (314) when the user at least fully inserts the at least one projection through the at least one opening;
the finger is adapted to return to the home position and engage the second end of the projection when the lip engages the at least the portion of the outer face of the first part; and
the finger and the lip are adapted to cooperate to maintain the first part and the second part in a connected relationship, and preferably wherein the finger is disposed substantially within a plane of the at least one opening.

9. The assembly of Claim 8, wherein:
the at least one projection comprises an H-shaped projection; and
the finger is adapted to engage a central portion of the H-shaped projection when the lip engages the at least the portion of the outer face of the second part; and preferably
wherein the finger is disposed within a recess defined by said H-shaped projection when the H-shaped projection is fully inserted into the at least one opening.

10. The assembly of Claim 8 or 9, wherein the at least one opening is sized to correspond to a profile the at least one projection.

11. The assembly of Claim 8, 9 or 10, wherein:
the first part (312,314) is a first side frame assembly of the hand truck (300); and
the second part (309,318) is a central connector of the hand truck; wherein
the connection between the first and second parts is adapted to allow a user to attach the central connector to the first side frame assembly substantially without the use of tools.

12. The assembly of any of Claims 8 to 11, wherein:
the first part (314) defines a substantially T-shaped opening (375); and
the second part (318) comprises a second projection (396) that extends from the second part and that comprises at least one lip (374), wherein:
a. the second projection is adapted to allow the user to insert the second proj ection into a wide portion of the T-shaped opening and slide the second projection laterally so that at least a portion of the second projection's at least one lip (374) engages a particular portion of an outer face of the first part (314); and
b. the second projection is adapted to maintain the first part adjacent the second part when the second projection is disposed within the T-shaped opening and the at least a portion of the second projection's lip is engaging the particular portion of the outer face of the first part.

13. The assembly of Claim 12, wherein the first part and second part are adapted to allow the user to attach the first part to the second part by following the steps of:
(a) inserting the second projection (396) into the wide portion of the T-shaped opening (375);
(b) sliding the second projection laterally within the T-shaped opening until the at least a portion of the second projection's at least one lip engages the at least a portion of the outer face of the first part; and
(c) inserting the first projection (392) into the first opening (376).

14. A hand truck comprising:
(A) a frame assembly (310);
(B) a nose plate (320) attached adjacent a lower end of the frame assembly; and
(C) a wheel assembly (330) that is attached adjacent the lower end of the frame assembly (310), the wheel assembly comprising at least one wheel (336,338) that is adapted to facilitate the rolling movement of the hand truck over a support surface supporting the hand truck
wherein the frame assembly comprises:
a first elongated tubular member (341) comprising a first tab (355) that extends outwardly a distance from a first end of the first elongated tubular member;
a second elongated tubular member (345) comprising a second tab (365) that extends outwardly a distance from a first end of the second elongated tubular member; and
at least one central connector (356,309) that extends between the first elongated tubular member (341) and the second elongated tubular member (345) and that defines:
(a) a first opening (357) that is sized to correspond to the profile of the first elongated tubular member (341) and that is adapted to allow a user to insert the first elongated tubular member into the opening;
(b) a second opening (367) that is sized to correspond to the profile of the second elongated tubular member (345) and that is adapted to allow a user to insert the second elongated tubular member into the opening;
(c) a first tab notch (3 5 8) adjacent the first tab when the user at least fully inserts the first elongated tubular member into the first opening; and
(d) a second tab notch (368) adjacent the second tab when the user at least fully inserts the second elongated tubular member into the second opening;
wherein:
the first elongated tubular member (341) is adapted to allow a user to twist the first tab (355) within the first tab notch (358) after the user has at least fully inserted the first elongated tubular member into the first opening;
the portions of the central connector (309,356) that define the first tab notch (355) are adapted to engage and exert opposing forces on the first tab when the user twists the first tab within the first tab notch;
the first tab notch is adapted to lock the first tab using the opposing forces;
the second elongated tubular member (345) is adapted to allow a user to twist the second tab (365) within the second tab notch (368) after the user has at least fully inserted the second elongated tubular member into the opening;
the portions of the central connector that define the second tab notch are adapted to engage and exert opposing forces on the second tab when the user twists the second tab within the second tab notch; and
the second tab notch is adapted to lock the second tab using the opposing forces.

15. The hand truck of Claim 14, wherein
the at least one central connector is a secondary wheel assembly (356); and/or
the first and second tabs are substantially planar; and/or
the frame assembly comprises two central connectors (356,309) interconnected by said first and second elongated tubular members (341,345), a pair of said first and second tabs on each of said members disposed one at each end of the respective connector, whereby twisting the elongate first and second members simultaneously engages both tabs of at least one of said pairs in respective notches (358,368) of the two central connectors.
